(19) Europäisches Patentamt
European Patent Office
Office européen des brevets

(11) **EP 4 079 443 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **21170243.6**

(22) Anmeldetag: **23.04.2021**

(51) Internationale Patentklassifikation (IPC):
*B23K 26/00* (2014.01)    *B23K 26/0622* (2014.01)
*B23K 26/06* (2014.01)    *B23K 26/066* (2014.01)
*B23K 26/073* (2006.01)    *B23K 26/53* (2014.01)
*B23K 103/00* (2006.01)

(52) Gemeinsame Patentklassifikation (CPC):
**B23K 26/0006; B23K 26/0624; B23K 26/0626;
B23K 26/066; B23K 26/0738; B23K 26/53;**
B23K 2103/54; B23K 2103/56

(54) **VERFAHREN ZUM KONTROLLIEREN EINER MITTELS EINES LINIENFOKUS EINES LASERSTRAHLS INNERHALB EINES SUBSTRATS EINGEBRACHTEN ENERGIEVERTEILUNG**

METHOD FOR CONTROLLING AN ENERGY DISTRIBUTION INTRODUCED WITHIN A SUBSTRATE BY MEANS OF A LINE FOCUS OF A LASER BEAM

PROCÉDÉ DE VÉRIFICATION D'UNE DISTRIBUTION D'ÉNERGIE APPLIQUÉE AU MOYEN D'UN FOYER LINÉAIRE D'UN FAISCEAU LASER À L'INTÉRIEUR D'UN SUBSTRAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.10.2022 Patentblatt 2022/43**

(73) Patentinhaber: **SCHOTT AG
55122 Mainz (DE)**

(72) Erfinder:
• **Ortner, Andreas
  55435 Gau-Algesheim (DE)**
• **Sohr, David
  55128 Mainz (DE)**
• **Koglbauer, Andreas
  65468 Trebur (DE)**
• **Thomas, Jens Ulrich
  55128 Mainz (DE)**
• **Wagner, Fabian
  55118 Mainz (DE)**
• **Sohr, Oliver
  55116 Mainz (DE)**

(74) Vertreter: **Fuchs Patentanwälte Partnerschaft mbB
Tower 185
Friedrich-Ebert-Anlage 35-37
60327 Frankfurt am Main (DE)**

(56) Entgegenhaltungen:
US-A1- 2020 254 567    US-A1- 2020 361 037
US-B1- 10 010 971    US-B2- 10 661 384
US-B2- 10 882 143

**Beschreibung**

Die vorliegende Erfindung betrifft ein Verfahren zum Kontrollieren einer mittels zumindest eines Linienfokus zumindest eines Laserstrahls innerhalb eines Substrats eingebrachten Energieverteilung, siehe Anspruch 1.

Stand der Technik

Um ein Substrat entlang einer Trennfläche zu trennen, sind aus dem Stand der Technik unter anderem laserbasierte Verfahren bekannt. Dabei lassen sich gekrümmte Seitenflächen bei den getrennten Substratteilen ausbilden, indem entlang der geplanten Trennfläche mit einem gekrümmten Linienfokus eines Lasers Modifikationen in das Substrat eingebracht werden oder Material von dort entfernt wird. Anschließend erfolgt die Trennung entlang der eingebrachten Schädigungen.

Allerdings weisen diese Trennflächen den Nachteil auf, dass sie nicht symmetrisch ausgebildet sind.

Die US 10,010,971 B1 (offenbarend den Oberbegriff des Anspruchs 1) betrifft Systeme und Verfahren für die Laserbearbeitung von Materialien.

Die US 10,882,143 B2 betrifft diffraktive optische Elemente, die in optischen Systemen zur Strahlformung eines Laserstrahls und insbesondere zur Strahlformung eines Laserstrahls zur Bearbeitung von Materialien, die für den Laserstrahl im Wesentlichen transparent sind, eingesetzt werden. Ferner betrifft sie ein System und ein Verfahren zur Lasermaterialbearbeitung.

Die US 10,661,384 B2 betrifft ein optisches System zur Strahlformung eines Laserstrahls und insbesondere zur Strahlformung eines Laserstrahls zur Bearbeitung von Materialien, die für den Laserstrahl im Wesentlichen transparent sind. Ferner betrifft sie ein Verfahren zur Strahlformung.

Die US 2020/254567 A1 betrifft Vorrichtungen und Verfahren zur Laserbearbeitung von Werkstücken und insbesondere auf die selektive Laserbearbeitung von Werkstückstapeln mit mehreren Werkstücken.

Die US 2020/361037 A1 betrifft Vorrichtungen und Verfahren zur Laserbearbeitung von transparenten Werkstücken und insbesondere auf Laserstrahlen mit Laserstrahlbrennlinien, die quasi nicht-beugend sind und einen quasi nicht-beugenden Charakter beibehalten, wenn sie unter einem nicht-normalen Einfallswinkel auf ein transparentes Werkstück gerichtet werden. Es ist daher Aufgabe der vorliegenden Erfindung, Mittel anzugeben, die es ermöglichen, eine gekrümmte Trennfläche eines Substrats mit hoher Symmetrie zuverlässig auszubilden. Außerdem ist es Aufgabe der vorliegenden Erfindung, ein Substrat mit symmetrischer Seitenfläche anzugeben.

Beschreibung der Erfindung

Entsprechend einem ersten Aspekt der Erfindung ist im Anspruch 1 ein Verfahren zum Kontrollieren einer mittels zumindest eines Linienfokus zumindest eines Laserstrahls innerhalb eines Substrats eingebrachten Energieverteilung definiert.

Weitere Ausführungsbeispiele des ersten Aspekt der Erfindung sind in den abhängigen Ansprüche definiert.

Der Erfindung liegt damit die überraschende Erkenntnis zugrunde, dass durch die Deposition der Laserpulsenergie symmetrisch um den Scheitelpunkt eines gekrümmten Linienfokus herum eine gekrümmte, symmetrische Modifizierung des Substratmaterials entlang des Dickenbereichs des Substrats zuverlässig erreicht werden kann.

Es wurde insoweit vor allem erkannt, dass die Verteilung der im Substratmaterial deponierten Laserenergie, mithin die Energieverteilung innerhalb des Materials, mit Hilfe einer Phasenmaske besonders zuverlässig und auf dennoch einfache Weise kontrolliert werden kann. Indem der Laserstrahl durch die Phasenmaske geeignet beeinflusst wird, wurde genauer gesprochen überraschend festgestellt, dass der Effekt, dass sich dadurch im Vakuum oder in Luft die Intensitätsverteilung des Linienfokus sozusagen entlang der Trajektorie des Laserfokus verschieben lässt, geeignet ist, um die Verteilung der im Material deponierten Energie zu kontrollieren und damit die Modifizierung des Materials zu verbessern. So kann der Ort, insbesondere der Schwerpunkt, der Materialschädigung entlang der Fokus-Trajektorie bestimmt und die Materialschädigung an einem gewünschten Ort entlang des Linienfokus platziert werden.

Herkömmlicherweise wird die Laserpulsenergie entlang der Fokus-Trajektorie verschoben zu deren Scheitelpunkt deponiert. Um dennoch eine ausreichende Modifizierung entlang des gesamten Dickenbereichs eines Substrats zu erreichen, musste daher bisher der Fokus des Laserstrahls (beispielsweise ein Airy-Strahl) und damit auch der Scheitelpunkt des, insbesondere gekrümmten, Linienfokus in Richtung eines der beiden Deckflächen des zu trennenden Substrats verschoben werden, um die Energiedeposition mittig in dem Dickenbereich des Substrats anzuordnen.

Mit anderen Worten: Nachdem also bisher mehr Energie oberhalb des Scheitelpunktes, also etwa in Richtung der oberen, insbesondere der der Laserquelle zugewandten, Deckfläche des Substrats deponiert wurde, musste der Scheitelpunkt des Linienfokus näher an die untere Deckfläche gelegt werden, um die Energiedeposition mittig innerhalb des Tiefenbereichs des Substrats zu legen. Anderenfalls wurde der untere Bereich unzureichend oder zumindest geringer modifiziert.

Dementsprechend weisen die getrennten Substratteile herkömmlicherweise eine Seitenfläche auf, deren Verlauf nicht symmetrisch ist, sondern bei denen der Scheitelpunkt zu einer der beiden Deckflächen hin verschoben ist.

Eine Modifizierung des Substratmaterials kann beispielsweise in einer Ausführungsform durch die Beeinflussung des Substratmaterials direkt oder indirekt durch zumindest teilweise die im Substratmaterial, insbesondere durch den Linienfokus, eingebrachte Energie erfolgen. Dabei wird genauer genommen das elektromagnetische Feld des Lasers dazu führen, dass ein Anteil der Laserpulsenergie in das Substratmaterial eingebracht und dort in einer von Strahlgeometrie, Laser- und Substratmaterialparametern abhängigen Verteilung deponiert wird.

Die Erfindung ermöglicht es daher allgemein, die durch den Linienfokus erzeugte Energieverteilung im Material zu kontrollieren, indem durch das Beeinflussen des Laserstrahls mit einer Phasenmaske die Energieverteilung örtlich verschoben wird.

In einer Ausführungsform weist das Kontrollieren der Energieverteilung das Kontrollieren der räumlichen Ausdehnung und/oder des Schwerpunkts der Energieverteilung auf.

Das Verfahren eignet sich damit besonders vorteilhaft im Zusammenhang mit dem Strukturieren von Oberflächen. Denn das Verfahren ermöglicht es, die Energieverteilung entlang des Linienfokus an eine gewünschte Position innerhalb des Substrats zu platzieren.

So kann mittels der gekrümmten Modifizierung (einschließlich eines gekrümmten Bereichs, von dem Material entfernt oder verdrängt wurde), die in dem Substratmaterial durch einen gekrümmten Linienfokus erzeugt wurde, auch die Krümmung der geplanten Trennfläche beeinflusst oder bestimmt werden und mithin die Krümmung der Seitenfläche der Substratteile nach dem Trennen. Durch geeignete Beeinflussung des Laserstrahls während der Modifizierung des Materials lässt sich damit ein symmetrischer Krümmungsverlauf der Seitenfläche der Substratteile erreichen.

Das vorgeschlagene Verfahren weist daher vorzugsweise ferner das Einbringen zumindest einer Modifikation im Material eines Substratbereichs entlang des ausgebildeten und in Bezug auf die Energieverteilung kontrollierten Linienfokus und/oder das Trennen des Substrats entlang einer durch eine Vielzahl solcher Modifikationen vorgegebenen Trennfläche auf. Eine Modifikation kann beispielsweise eine Änderung der Dichte, des Brechungsindex, der Spannungswerte, der mechanischen Integrität und/oder der, insbesondere sauren oder alkalischen, Ätzrate des Substratmaterials aufweisen. Eine Modifikation kann beispielsweise auch das Entfernen von Substratmaterial vom Substrat, das Verdrängen von Substratmaterial, insbesondere das Hineinverdichten von Substratmaterial in das umgebene Substrat, und/oder das Erzeugen von Mikrorissen aufweisen.

Indem die Orientierung der Krümmung des Linienfokus derart gewählt wird, dass der Verlauf der Krümmung, insbesondere die Beschleunigungsrichtung der Krümmung, nicht parallel zur und/oder senkrecht zur Haupterstreckungsrichtung der geplanten Trennfläche verläuft, kann durch die Krümmung des Linienfokus die Krümmung der Trennfläche und damit die der Seitenflächen der Substratteile beeinflusst oder bestimmt werden.

Daher ist es in einer Ausführungsform bevorzugt, dass die Krümmung nicht parallel zur geplanten Trennlinie verläuft, sondern beispielsweise senkrecht dazu.

In einer Ausführungsform wird vorzugsweise durch die Ausrichtung des Linienfokus, insbesondere die Orientierung der Krümmung, innerhalb des Substrats, die Krümmung der Seitenfläche eines geteilten Substratteils mitbestimmt, insbesondere die Krümmung entlang einer Richtung senkrecht zur Haupterstreckungsrichtung der Seitenfläche.

Damit ermöglicht es die Erfindung erstmalig, einen symmetrischen Verlauf einer gekrümmten Trennfläche unmittelbar nach dem Trennprozess unter Vermittlung der modifizierten Substratbereiche, insbesondere ohne Nachbearbeitungsschritte wie Polieren zum Zwecke der Kantenformung, zu erreichen, und zwar vor allem auch bei sehr dicken Substraten, also etwa Substraten mit einer Dicke von mehr als 500 μm. Dies kann durch Positionieren der Energieverteilung um den Scheitelpunkt der Fokus-Trajektorie herum erreicht werden.

Denn die beobachtete Deposition der Laserpulsenergie an einem vom Scheitelpunkt verschobenen Position entlang der Fokus-Trajektorie wird entsprechend der Erfindung durch die Beeinflussung mit der Phasenmaske kompensiert.

Dies bewirkt, dass eine symmetrische Ausprägung der Materialmodifikation erreicht wird. Außerdem kann damit auch besonders zuverlässig eine gleichmäßige und vollständig durch das Material laufende Materialmodifikation erreicht werden. Die Energieverteilung kann also mittels des Linienfokus in das Substratmaterial eingebracht werden. Mit anderen Worten ausgedrückt, kann mittels des Linienfokus eine Energie in dem Substrat räumlich verteilt deponiert und diese verteilte Energie wird erfindungsgemäß kontrolliert werden.

Damit ist es möglich, eine symmetrische Ausprägung der erzeugten Trennfläche zu erreichen. Dies gilt für dünne Substratdicken, beispielsweise ab 10 μm Dicke und/oder bis 500 μm Dicke. Und es gilt gleichermaßen auch sogar für Substratdicken von 500 μm oder größer, zum Beispiel bei einer Substratdicke von 525 μm. Beispielsweise kann das Substrat eine Dicke von 700 μm oder mehr, von 1 mm oder mehr, von 3 mm oder mehr, von 5 mm oder mehr oder sogar von 7 mm oder mehr aufweisen.

Durch die erfindungsgemäße Lösung wird es folglich unter anderem ermöglicht, die Lage der Energieverteilung, insbesondere relative zum Scheitelpunkt der Fokustrajektorie und damit die Position und Gestalt der im Substratmaterial erzeugten Modifikation flexibel einzustellen.

In einer Ausführungsform wird die Dicke des Substratmaterials zwischen den beiden Hauptseiten des Substrats gemessen.

Vorzugsweise ist das Substrat transparent, insbesondere für die Wellenlänge des Laserstrahls, vorzugsweise im sichtbaren Wellenlängenbereich, im IR-Wellenlängenbereich und/oder im UV-Wellenlängenbereich.

Vorzugsweise ist das Substrat aus einem Glasmaterial oder weist dieses auf. Alternativ oder ergänzend kann das Substrat auch Glaskeramik, Silizium, Saphir und/oder Quarzglas aufweisen oder daraus bestehen.

Der Linienfokus ist vorzugsweise ein gekrümmter Linienfokus. Der Linienfokus ist alternativ oder ergänzend ein Fokus eines Airy-Beams. Vorzugsweise ist der Linienfokus alternativ oder ergänzend ein Fokus eines Laserstrahls eines gepulsten Lasers, insbesondere eines ultrakurz gepulsten Lasers mit Pulsweiten von 10 ps oder weniger, vorzugsweise von 5 ps oder weniger, vorzugsweise von 3 ps oder weniger, vorzugsweise von 1 ps oder weniger, vorzugsweise von 0,5 ps oder weniger.

Die Phasenmaske phasenmoduliert den Laserstrahl.

Die Phasenmaske beeinflusst den Laser dabei vorzugsweise dadurch, dass sie durch lateral aufgelöste Änderung der optischen Weglänge dem Laserstrahl eine zusätzliche optische, nicht konstante Phase aufprägt.

Die Phasenmaske kann zum Beispiel realisiert sein als Freiform-Optik, als diffraktives optisches Element (DOE), als akustooptischer Modulator (AOM), oder als liquid crystal on silicon spatial light modulator (LCOS-SLM).

Die Phasenmaske kann aber auch ganz oder teilweise mittels anderer Elemente, die eine definierte Phasenänderung ermöglichen, realisiert sein.

In einer Ausführungsform wird als Phasenmaske ein DOE eingesetzt.

Das Verfahren eignet sich damit besonders gut im Bereich des Trennens und der Oberflächenstrukturierung von Substraten, insbesondere Glassubstraten. Beispielsweise eignet sich das Verfahren besonders gut für das Vorbereiten und/oder Durchführen des Trennens von solchen Substraten in Substratteile.

Alternativ oder ergänzend kann auch vorgesehen sein, dass die zumindest eine Phasenmaske eine Phasenmaske mit kubischer Phasenverteilung oder einer Phasenverteilung höherer, insbesondere ungerader, Ordnung ist und/oder die Phasenmaske im Strahlengang des Laserstrahls vor dem Substrat angeordnet ist, und insbesondere der Laserstrahl, vorzugsweise der Schwerpunkt des in der Ebene der Phasenmaske bestehenden Strahl-Querschnitts, einen Auftreffpunkt auf der Phasenmaske hat.

Eine kubische Phasenmaske ist einfach einzurichten und liefert zuverlässig die Möglichkeit, die Energieverteilung zu kontrollieren.

Eine Phasenmaske mit ungerader Ordnung (für Ordnungen größer gleich 3) ist vorteilhaft, da hierbei eine laterale Verschiebung des Eingangsstrahls auf der Optik in gleichbleibender Richtung eine Verschiebung des Schwerpunkts der Energieverteilung des Fokus (mithin die Energieverteilung im Substrat) in gleichbleibender Richtung entlang der Trajektorie und/oder Propagationsrichtung des Laserstrahls erreich werden kann.

Alternativ oder ergänzend kann auch vorgesehen sein, dass das Ausbilden des Linienfokus aufweist, dass die Position des Scheitelpunkts oder Mittelpunkts des, insbesondere gekrümmten, Linienfokus mittig entlang eines Tiefenbereichs, vorzugsweise eines Dickenbereichs, des Substrats eingestellt wird.

Indem der Scheitelpunkt des gekrümmten Linienfokus entsprechend positioniert wird, erstreckt sich die Trajektorie des Linienfokus symmetrisch um die Mittelebene des Substrats. Dadurch wird die Möglichkeit eröffnet, eine Modifikation in das Substrat einzubringen, die sich symmetrisch um die Mittelebene des Substrats erstreckt.

Damit lässt sich eine Modifikation in das Substrat einbringen, die sich symmetrisch um die Mittelebene des Substrats erstreckt, indem ferner zum Beispiel auch die Energieverteilung symmetrisch um den Scheitelpunkt herum durch geeignete Beeinflussung mit der Phasenmaske positioniert wird.

Die Positionierung des Linienfokus und damit dessen Scheitelpunkt kann beispielsweise dadurch erfolgen, dass der Abstand zwischen der eingesetzten Fokussieroptik und dem Substrat variiert wird. Beispielsweise kann dazu das Substrat und/oder die Fokussieroptik entlang der Strahlpropagationsrichtung translatiert werden. Mit der Fokussieroptik wird vorzugsweise der Laserstrahl auf das Substrat fokussiert.

Alternativ oder ergänzend kann die Positionierung des Linienfokus und damit dessen Scheitelpunkt dadurch erfolgen, dass die Brennweite des Systems angepasst wird, wobei vorzugsweise die numerische Apertur des Systems beibehalten wird. Beispielsweise weist dazu die Fokussieroptik ein mehrlinsiges System mit variabler Brennweite auf.

Die Mittelebene ist hier vorzugsweise diejenige Ebene, die mittig innerhalb des Substrats, also zwischen dessen beiden Deckflächen, verläuft und deren Normalenvektor parallel zur Haupterstreckungsrichtung des Laserstrahls verläuft.

Alternativ oder ergänzend kann auch vorgesehen sein, dass das Kontrollieren der Energieverteilung innerhalb des Substrats ferner das Einstellen der Pulsenergie, der Pulsdauer, der Anzahl von Pulsen im Burst, der Energieverteilung im Burst und/oder der Laser-Wellenlänge aufweist, wobei vorzugsweise die Pulsenergie derart eingestellt wird, dass der Linienfokus innerhalb des Substrats zumindest einen Abschnitt aufweist, entlang dessen das Substratmaterial aufgrund der im Substrat deponierten Energie, insbesondere durch eine Wechselwirkung zwischen der Energie und dem Substratmaterial, modifiziert wird, wobei vorzugsweise der Abschnitt eine Länge von (a) mehr als 0,1 mm, vorzugsweise mehr als 0,3 mm, vorzugsweise mehr als 0,5 mm, vorzugsweise mehr als 0,7 mm, vorzugsweise mehr als 1 mm, vorzugsweise mehr als 3 mm, vorzugsweise mehr als 5 mm, (b) weniger als 5 mm, vorzugsweise weniger als 3 mm, vorzugsweise weniger als 1 mm, vorzugsweise weniger als 0,7 mm, vorzugsweise weniger als 0,5 mm, vorzugsweise weniger als 0,3 mm, vorzugsweise weniger als 0,1 mm, und/oder (c) zwischen 0,1 mm und 5 mm, vorzugsweise zwischen 0,5 mm und 2 mm, aufweist.

Es wurde erkannt, dass nicht nur die Phasenmaske die Energieverteilung, insbesondere deren Position entlang der Fokus-Trajektorie, beeinflussen kann, sondern auch eine Änderung der Pulsenergie zu einer Änderung der Energieverteilung, insbesondere deren Position entlang der Fokus-Trajektorie und/oder deren Gestalt, wie die räumliche Ausdehnung, führen kann. Daher lässt sich über die Pulsenergie die Energieverteilung mitkontrollieren.

Gleichermaßen können auch die weiteren Parameter wie die Pulsdauer oder die Anzahl Pulse im Burst sowie die Wellenlänge des Laserstrahls entsprechend für eine Kontrolle eingesetzt werden, wie die Erfinder festgestellt haben.

Um mittels des Linienfokus und der von ihm in das Substrat eingebrachten Energieverteilung eine Modifikation in das Substrat einbringen zu können, ist an den entsprechenden Stellen eine Energiedichte notwendig, die höher als ein, insbesondere materialabhängiger, Schwellenwert ist. Daher ist es vorteilhaft, wenn die Verteilung der Energie durch eine geeignet gewählte Pulsenergie angepasst wird, so dass ausreichend Energie im Substrat deponiert wird, um eine Wechselwirkung zwischen der Energie und dem Material zu erreichen, die zu der Modifikation führt. Besonders vorteilhaft für das erfindungsgemäße Verfahren kann es sein, wenn eine hohe Energiedichte in einem räumlich eng begrenzten Volumen erreicht wird. Hierdurch lassen sich besonders vorteilhaft Modifikationen im Substrat einbringen, die mit einer räumlich eng begrenzten, aber stark ausgeprägten Schädigung des Materials einhergehen und somit eine leichte Trennung des Substrats entlang der gewünschten Trennfläche ermöglichen, ohne die Seitenflächen der getrennten Substratteile zu schwächen.

Durch Anpassen der Pulsenergie kann beispielsweise die Länge eines Abschnitts des Linienfokus verändert werden, innerhalb dessen ein bestimmter Schwellenwert der Energiedichte überall überschritten wird, um damit sich zumindest entlang des Abschnitts erstreckende Modifikationen (einschließlich des Entfernens von Material) im Material zu erzeugen.

Beispielsweise kann der Schwellenwert abhängig von dem Material des Substrats sein.

Durch Anpassen der Pulsenergie kann beispielsweise auch die Position verändert werden, die die Energieverteilung, insbesondere deren Schwerpunkt, entlang der Fokus-Trajektorie einnimmt.

Daher ist die Pulsenergie eine ergänzende Möglichkeit, die Energieverteilung zu kontrollieren, insbesondere anzupassen, beispielsweise hinsichtlich der Position ihres Schwerpunktes und/oder hinsichtlich der Länge des Abschnitts des Linienfokus entlang dessen eine ausreichend hohe Energiedeposition im Substratmaterial erfolgt.

Alternativ oder ergänzend kann auch vorgesehen sein, dass

(i) die Pulsenergie zumindest zeitweise eingestellt wird

(a) auf 50 $\mu$J oder mehr, vorzugsweise 100 $\mu$J oder mehr, vorzugsweise 200 $\mu$J oder mehr, vorzugsweise 300 $\mu$J oder mehr, vorzugsweise 400 $\mu$J oder mehr, vorzugsweise 500 $\mu$J oder mehr, vorzugsweise 600 $\mu$J oder mehr, vorzugsweise 1000 $\mu$J oder mehr, vorzugsweise 1500 $\mu$J oder mehr, vorzugsweise 2000 $\mu$J oder mehr, vorzugsweise 2500 $\mu$J oder mehr, vorzugsweise 3000 $\mu$J oder mehr, vorzugsweise 3500 $\mu$J oder mehr, vorzugsweise 4000 $\mu$J oder mehr, vorzugsweise 4500 $\mu$J oder mehr, vorzugsweise 5000 $\mu$J oder mehr,

(b) auf 5000 $\mu$J oder weniger, vorzugsweise 4500 $\mu$J oder weniger, vorzugsweise 4000 $\mu$J oder weniger, vorzugsweise 3500 $\mu$J oder weniger, vorzugsweise 3000 $\mu$J oder weniger, vorzugsweise 2500 $\mu$J oder weniger, vorzugsweise 2000 $\mu$J oder weniger, vorzugsweise 1500 $\mu$J oder weniger, vorzugsweise 1000 $\mu$J oder weniger, vorzugsweise 600 $\mu$J oder weniger, vorzugsweise 500 $\mu$J oder weniger, vorzugsweise 400 $\mu$J oder weniger, vorzugsweise 300 $\mu$J oder weniger, vorzugsweise 200 $\mu$J oder weniger, vorzugsweise 100 $\mu$J oder weniger, vorzugsweise 50 $\mu$J oder weniger,
und/oder

(c) auf zwischen 50 $\mu$J und 5000 $\mu$J, vorzugsweise zwischen 10 $\mu$J und 100 $\mu$J, zwischen 100 $\mu$J und 300 $\mu$J, zwischen 150 $\mu$J und 300 $\mu$J, zwischen 200 $\mu$J und 400 $\mu$J, zwischen 300 $\mu$J und 600 $\mu$J, zwischen 600 $\mu$J und 1000 $\mu$J, zwischen 800 $\mu$J und 2000 $\mu$J, zwischen 1500 $\mu$J und 3000 $\mu$J, zwischen 2000 $\mu$J und 4500 $\mu$J oder zwischen 3000 $\mu$J und 5000 $\mu$J.
und/oder

(ii) die Pulsenergie eingestellt wird, so dass eine mittlere Linienenergiedichte besteht von

(a) 1 $\mu$J/mm oder mehr, vorzugsweise 5 $\mu$J/mm oder mehr, vorzugsweise 10 $\mu$J/mm oder mehr, vorzugsweise 20

μJ/mm oder mehr, vorzugsweise 30 μJ/mm oder mehr, vorzugsweise 40 μJ/mm oder mehr, vorzugsweise 50 μJ/mm oder mehr, vorzugsweise 60 μJ/mm oder mehr, vorzugsweise 70 μJ/mm oder mehr, vorzugsweise 80 μJ/mm oder mehr, vorzugsweise 90 μJ/mm oder mehr, vorzugsweise 100 μJ/mm oder mehr, vorzugsweise 150 μJ/mm oder mehr, vorzugsweise 200 μJ/mm oder mehr, vorzugsweise 250 μJ/mm oder mehr, vorzugsweise 300 μJ/mm oder mehr, vorzugsweise 350 μJ/mm oder mehr, vorzugsweise 400 μJ/mm oder mehr, vorzugsweise 500 μJ/mm oder mehr, vorzugsweise 600 μJ/mm oder mehr, vorzugsweise 700 μJ/mm oder mehr, vorzugsweise 800 μJ/mm oder mehr, vorzugsweise 900 μJ/mm oder mehr,

(b) 1000 μJ/mm oder weniger, vorzugsweise 900 μJ/mm oder weniger, vorzugsweise 800 μJ/mm oder weniger, vorzugsweise 700 μJ/mm oder weniger, vorzugsweise 600 μJ/mm oder weniger, vorzugsweise 500 μJ/mm oder weniger, vorzugsweise 400 μJ/mm oder weniger, vorzugsweise 350 μJ/mm oder weniger, vorzugsweise 300 μJ/mm oder weniger, vorzugsweise 250 μJ/mm oder weniger, 200 μJ/mm oder weniger, vorzugsweise 180 μJ/mm oder weniger, vorzugsweise 160 μJ/mm oder weniger, vorzugsweise 140 μJ/mm oder weniger, vorzugsweise 120 μJ/mm oder weniger, vorzugsweise 100 μJ/mm oder weniger, vorzugsweise 90 μJ/mm oder weniger, vorzugsweise 80 μJ/mm oder weniger, vorzugsweise 70 μJ/mm oder weniger, vorzugsweise 60 μJ/mm oder weniger, vorzugsweise 50 μJ/mm oder weniger, vorzugsweise 40 μJ/mm oder weniger, vorzugsweise 30 μJ/mm oder weniger, vorzugsweise 25 μJ/mm oder weniger, vorzugsweise 20 μJ/mm oder weniger, vorzugsweise 15 μJ/mm oder weniger, vorzugsweise 10 μJ/mm oder weniger, vorzugsweise 5 μJ/mm oder weniger, und/oder

(c) zwischen 1 μJ und 200 μJ/mm, insbesondere zwischen 10 μJ/mm und 120 μJ/mm, vorzugsweise zwischen 10 μJ/mm und 50 μJ, zwischen 40 μJ/mm und 80 μJ/mm, zwischen 70 μJ/mm und 100 μJ/mm, oder zwischen 80 μJ/mm und 120 μJ/mm.

Die vorgeschlagenen Pulsenergien und mittleren Linienenergiedichten sind besonders bevorzugt für ein Glassubstrat.

Wird ein Burst-Puls eingesetzt, so lässt sich vorzugsweise die Pulsenergie und die Burstenergie gemäß der Beziehung BURSTENERGIE = PULSENERGIE x ANZAHL PULSE IM BURST ineinander umrechnen. Eine Pulsenergie von beispielsweise 50 μJ und N=2 Pulse im Burst führen also zu einer Burstenergie von 50x2 μJ = 100 μJ und vice versa. So kann also auch durch Einstellen einer Burstenergie die Pulsenergie entsprechend eingestellt werden. Vorzugsweise ist die mittlere Linienenergiedichte definiert als der Quotient von Laserpulsenergie und Substratdicke. Die mittlere Linienenergiedichte kann alternativ vorzugsweise auch definiert sein als der Quotient von Laserpulsenergie und Länge der Modifikation im Substrat.

Die Erfinder gehen davon aus, dass vorzugsweise eine lokale Linienenergiedichte, d.h. eine über die zur Laserpropagationsrichtung senkrechten Ebene integrierte Energiedichte, von 1 μJ/mm oder mehr benötigt wird, um mit einem Airy-Strahl Modifikationen, etwa in Form einer Änderung des lokalen Brechungsindex des Materials, in Borosilikatglas zu erzeugen.

Alternativ oder ergänzend ist auch vorgesehen, dass das Kontrollieren der Energieverteilung innerhalb des Substrats das Verschieben der Position der maximalen Materialschädigung, oder das Verschieben der Position der Energieverteilung entlang der Trajektorie des Linienfokus aufweist, wobei vorzugsweise

(i) nach dem Anpassen der Position der Energieverteilung, am Scheitelpunkt des, insbesondere gekrümmten, Linienfokus zumindest ein Maximum der Energieverteilung positioniert ist,

(ii) nach dem Anpassen der räumlichen Ausdehnung und/oder der Position der Energieverteilung eine entlang der gesamten Substratdicke verlaufende Modifizierung des Substratmaterials durchgeführt wird oder erfolgt, und/oder

(iii) das Anpassen der Position der Energieverteilung zumindest teilweise ein Aufeinander-Abstimmen des Beeinflussens des Laserstrahls mittels der Phasenmaske und des Einstellens der Pulsenergie aufweist.

Indem das Maximum der Energieverteilung verschoben wird, kann der Ort der (maximalen) Modifikation besonders zuverlässig bestimmt werden. Damit lässt sich beispielsweise ein geplanter Trennvorgang am Substrat zuverlässig vorbereiten und/oder anschließend durchführen.

Indem das Maximum der Energieverteilung innerhalb des Substratmaterials am Scheitelpunkt positioniert wird, kann eine um den Scheitelpunkt herum symmetrische Modifikation in das Substrat eingebracht werden. Indem optional der Scheitelpunkt seinerseits symmetrisch innerhalb des Dickenbereichs des Substrats positioniert wird, lässt sich so eine Trennfläche und einhergehend damit eine Seitenfläche der getrennten Substratteile erhalten, die einen symmetrischen Verlauf aufweist (insbesondere innerhalb einer Querschnittsebene, die durch den Normalenvektor einer Deckfläche des Substrats und einen Normalenvektor der geplanten Trennfläche aufgespannt wird).

Es ist besonders bevorzugt in Ausführungsformen, dass das Beeinflussen mit der Phasenmaske und das Einstellen der Pulsenergie aufeinander abgestimmt sind. So lassen sich sehr flexibel die räumliche Ausdehnung und/oder Position einer Modifikation innerhalb des Substrats kontrollieren.

Beispielsweise kann die Pulsenergie derart gewählt werden, dass entlang des Linienfokus innerhalb des gesamten Dickenbereichs des Substrats überall eine derart hohe Energiedeposition durch den Linienfokus in dem Material besteht, dass Modifikationen in dem Material entlang des gesamten Dickenbereichs erzeugt werden können. Dies kann beispielsweise notwendig sein, um entlang des gesamten Dickenbereichs eine Modifikation in dem Substrat zu erreichen. Gleichzeitig wird durch eine darauf abgestimmte Beeinflussung mit der Phasenmaske die Position der Energieverteilung angepasst, etwa derart, dass sich ihr Maximum auf dem Scheitelpunkt der Fokus-Trajektorie befindet. Damit kann insgesamt eine (beispielsweise zur Ebene, insbesondere der Mittelebene, des Substrats, in der auch der Scheitelpunkt der Fokus-Trajektorie liegt) symmetrische Modifizierung des Substratmaterials entlang des gesamten Dickenbereichs erreicht werden.

In einer Ausführungsform ist der Ort der maximalen Modifizierung des Substrats am Ort des Scheitelpunkts der Linienfokus-Trajektorie und/oder in der Mitte entlang des Dickenbereichs des Glassubstrats.

Alternativ oder ergänzend kann auch vorgesehen sein, dass das Beeinflussen des Laserstrahls mittels wenigstens der zumindest einen Phasenmaske aufweist, dass der Laserstrahl versetzt zum Zentralpunkt der Phasenmaske auftrifft, wobei der Zentralpunkt derjenige Ort der Phasenmaske ist, an dem ein auf die Phasenmaske auftreffender Laserstrahl mit einem gegen Null gehenden Durchmesser von dem Sattelpunkt der auf der Phasenmaske aufgeprägten Phasenverteilung beeinflusst wird, und wobei vorzugsweise der Versatz innerhalb der Spiegelebene der Phasenverteilung erfolgt,

wobei vorzugsweise der Versatz zwischen 0,1 $\mu$m und 5000 $\mu$m, vorzugsweise zwischen 1 $\mu$m und 3000 $\mu$m, vorzugsweise zwischen 1 $\mu$m und 2000 $\mu$m, beträgt.

Eine besonders einfache und zuverlässige Möglichkeit der Beeinflussung des Laserstrahls ist es, diesen an unterschiedlichen Positionen auf die Phasenmaske auftreffen zu lassen. Denn die Phasenmaske beeinflusst den Laserstrahl, insbesondere hinsichtlich der Energieverteilung im Fokus, abhängig davon, auf welcher Position er auf die Phasenmaske auftrifft. Vorzugsweise kann man dabei den Auftreffpunkt als den Schwerpunkt des in der Ebene der Phasenmaske bestehenden Strahl-Querschnitts verstehen.

So wurde insbesondere festgestellt, dass, vor allem für eine kubische Phasenmaske, mit einem zunehmenden Versatz des Auftreffpunkts des Laserstrahls (besser gesagt: der des Schwerpunkts seines Querschnitts in der Ebene der Phasenmaske) von dem Zentralpunkt der Phasenmaske (insbesondere, wenn der Versatz innerhalb der Spiegelebene der Phasenverteilung erfolgt), sich innerhalb des Substrats der Ort maximaler Energie auf der Fokus-Trajektorie von dem Scheitelpunkt wegbewegt, und zwar je nach Vorzeichen des Versatzes in die eine oder andere Richtung entlang der Trajektorie.

Wenn in dieser Anmeldung von dem Zentralpunkt der Phasenmaske gesprochen wird, so wird dabei vorzugsweise derjenige Ort der Phasenmaske verstanden, an dem ein auf die Phasenmaske auftreffender Laserstrahl mit einem gegen Null gehenden Durchmesser von dem Sattelpunkt der auf der Phasenmaske aufgeprägten Phasenverteilung beeinflusst wird.

Die Phasenverteilung und damit auch der Ort des Sattelpunkt der Phasenverteilung auf der Phasenmaske kann beispielsweise mit einem Mikroskop bestimmt werden. Alternativ kann der Ort des Sattelpunkts auch experimentell bestimmt werden, indem beispielsweise ein Laserstrahl (bzw. dessen Schwerpunkt in der Strahl-Querschnittsebene auf der Phasenmaske) an unterschiedlichen Orten auf der Phasenmaske auftrifft und derjenige Ort der Phasenmaske als der Zentralpunkt identifiziert wird, bei dem der durch die Phasenmaske gelaufene Laserstrahl so beeinflusst wird, dass bei geeigneter Abbildung in der linearen Propagation (messbar durch einen Mikroskopaufbau oder Ablationsmuster auf einer Substrat-Oberfläche) die maximale Intensität am Scheitelpunkt der Parabel erreicht wird, und/oder die Intensitätsverteilung symmetrisch um diesen verteilt ist, und die Nebenmaxima vor und nach dem Fokus symmetrisch ausgeprägt sind. Oder anders ausgedrückt, dass die lineare Propagation einem idealen Airy-Strahl entspricht.

Vorzugweise befindet sich der Sattelpunkt und damit auch der Zentralpunkt am geometrischen Mittelpunkt der Phasenmaske. Dies kann beispielsweise durch eine zentrierte Phasenfunktion erreicht werden.

Vorzugsweise ergibt sich die Tiefenänderung des Maximums der Energieverteilung für einen Versatz dx als Änderung der effektiven Brennweite hinter der verwendeten Fokussieroptik um einen Betrag df der nach der angegebenen Gleichung:

$$df = \frac{1}{\frac{1}{f_0} + \frac{\sqrt{2}\beta^3 dx}{k_0}} - f_0$$

Hierbei sind:

- $k_0$ der Wellenvektor mit $k_0$=2*pi*n/Lambda, mit Wellenlänge Lambda und Brechzahl n des Mediums, innerhalb dessen der Fokus ausgebildet wird

- $f_0$ die Brennweite der eingesetzten Fokussieroptik

- Beta ist der Skalierungsfaktor der kubischen Phase phi, mit $\varphi = exp(\frac{i\beta}{3} * (x^3 + y^3))$ , beispielsweise mit $\beta = 3^{1/3} mm^{-1}$, für x und y in mm.

Damit ermöglicht es das vorgeschlagene Verfahren folglich, eine Fokusverschiebung durch lateralen Strahlversatz zu erzeugen, und diese Fokusverschiebung zur Kontrolle der Energieverteilung mit auszunutzen.

Alternativ oder ergänzend kann auch vorgesehen sein, dass

(i) der Versatz eingestellt wird

(a) durch ein Bewegen der Phasenmaske relativ zu dem Laserstrahl;

(b) durch zumindest eine gedrehte planparallele Platte, insbesondere aus einem Glasmaterial und/oder einem optischen, vorzugsweise bei der Laserwellenlänge transparenten Material;

(c) durch wenigstens zwei, im Strahlengang hintereinander angeordneten Prismen, wobei die Prismen vorzugsweise gleiche Prismenwinkel aufweisen und vorzugsweise das zweite Prisma um 180° um die optische Achse rotiert gegenüber dem ersten Prisma angeordnet ist;
und/oder

(d) durch ein Translatieren, insbesondere innerhalb des Strahlengangs und/oder parallel zur Richtung des einfallenden Strahles, eines den Laserstrahl umlenkenden Umlenkspiegels.
und/oder

(iii) der Versatz eingestellt wird durch Ablenkung des, vorzugsweise parallel zur und/oder entlang der Mittelachse der Phasenmaske verlaufenden, Laserstrahls mittels wenigstens eines ersten Mittels, so dass der Richtungsvektor des auf die Phasenmaske auftreffenden Strahls einen Winkel mit dem Richtungsvektor der Mittelachse der Phasenmaske einschließt, wobei vorzugsweise der Winkel 1/500 radiant oder kleiner, vorzugsweise 1/1000 radiant oder kleiner, vorzugsweise 1/2000 radiant oder kleiner, ist,

und wobei vorzugsweise die Ablenkung eingestellt wird mittels des ersten Mittels aufweisend

(a) zumindest ein drehbar gelagertes Prisma;

(b) zumindest einen drehbar gelagerten Spiegel;

(c) zumindest einen Polygon- oder Galvoscanner;

(d) zumindest einen akustooptischen Modulator;

(e) zumindest einen liquid crystal on silicon spatial light modulator;
und/oder

(f) zumindest einen Micro-Electronic-Mirror-Baustein;

und wobei vorzugsweise ferner ein zu dem ersten Mittel identisches, zweites Mittel vorgesehen und im Strahlengang vor oder nach der Phasenmaske angeordnet wird und/oder synchron mit dem ersten Mittel gesteuert wird, um den Laserstrahl derart abzulenken, dass er senkrecht auf die Phasenmaske und/oder das Substrat einfällt und/oder parallel aber versetzt zu dem Verlauf vor dem Umlenken mit dem ersten Mittel verläuft.

Demnach sind vor allem zwei Prinzipien, den Versatz einzustellen, besonders bevorzugt. Bei dem einen fällt der Laserstrahl parallel zur Mittelachse der Phasenmaske (alternativ auch: parallel zur optischen Achse des zur Fokussierung genutzten Systems, inklusive der Phasenmaske und der Fokussierungsoptik, wie ein Mikroskopobjektiv oder eine asphärische Linse) ein. Bei dem anderen fällt der Laserstrahl mit einem Winkel zur Mittelachse der Phasenmaske ein.

Bei letzterem kann der (bezogen auf die Mittelachse der Phasenmaske) schräge Strahlverlauf dadurch wieder sozusagen rückgängig gemacht werden, indem mit einem identischen Mittel der Winkel korrigiert wird. Der Strahl wird folglich durch das erste und zweite Mittel im Ergebnis versetzt, verläuft aber vor dem ersten und nach dem zweiten Mittel entlang paralleler Richtungen.

Wenn der laterale Versatz des Eingangsstrahls auf der, insbesondere kubischen, Phasenmaske durch eine gedrehte planparallele Platte hergestellt wird, kann der erreichbare Maximalversatz durch die Dicke, Brechzahl und laterale Ausdehnung der planparallelen Platte relativ zum Durchmesser des Laserstrahls sehr einfach angepasst werden.

Wenn der Versatz durch zwei hintereinander im Strahlengang befindliche Prismen mit gleichen Prismenwinkeln realisiert wird, kann der erreichbare Versatz durch die Größe der Prismen relativ zum Durchmesser des Laserstrahls, den Auslenkungswinkel der Prismen und ihren maximalen Abstand zueinander sehr einfach angepasst werden. Beispielsweise können die Größen, Winkel und Abstände wie folgt gewählt sein: Größe, insbesondere Durchmesser, des Prismas von zwischen 10 mm und 60 mm (oder auch mehr als 60 mm), vorzugsweise von zwischen 10 mm und 26 mm; Auslenkungswinkel gemäß der Gleichung x = sin(th)*d, mit dem lateralen Strahlversatz x, dem Auslenkungswinkel th und dem Abstand der Prismen d; Abstand von zwischen 1 mm und 200 mm (oder auch mehr als 200 mm).

Wenn der Versatz dadurch erreicht wird, dass ein Umlenkspiegel im Strahlengang translatiert wird, ist eine Translation parallel zur Richtung des einfallenden Strahles besonders vorteilhaft. Denn dadurch ist der maximale Versatz nicht durch die Größe der Optik beschränkt.

Diese Optionen erzeugen vorzugsweise einen reinen lateralen Versatz ohne Änderungen der Strahlrichtung.

Insbesondere bei ausreichend kleinen Ablenkungen und einem ausreichend großen zur Verfügung stehenden Abstand (beispielsweise 100 cm oder mehr, vorzugsweise 150 cm oder mehr, vorzugsweise 200 cm oder mehr, vorzugsweise 300 cm oder mehr, vorzugsweise 400 cm oder mehr) zur Phasenmaske kann auch durch eine Winkeländerung des Eingangsstrahls der gewünschte Effekt eines Versatzes in besonders zuverlässiger Weise erreicht werden.

Das Einstellen der Ablenkung mit einem Scanner oder einem akustooptischen Modulator (AOM) sind besonders bevorzugt. Denn aufgrund der kurzen Ansprechzeiten dieser Bauteile sind diese prinzipiell auch geeignet, eine signifikante Ablenkung selbst bei kurzen Pulsabständen, z. B. innerhalb eines Laserbursts, zu erreichen. Hierdurch kann beispielsweise besonders zuverlässig ein on-the-fly-Modifizieren des Substrates, insbesondere mit mehreren, versetzten Laserpulsen, die jeweils das Substrat in einem separaten Tiefenabschnitt auf einer durchgehenden Trajektorie innerhalb des Substrats modifizieren, vor allem ohne Geschwindigkeitsänderung, Abbremsen oder Stoppen der Achsen während eines Strukturierungsprozesses möglich gemacht werden. Dies gilt insbesondere in den Fällen, in denen das Substrat relativ zu einem Linienfokus mit einer Verfahrgeschwindigkeit von kleiner gleich 2 m/s bewegt wird und/oder bei Intraburstpulsabständen von 25 ns oder weniger. Hier kann beispielsweise als Vergleichsgröße der Durchmesser der Modifikation selbst (beispielsweise 1-10 $\mu$m) verwendet werden.

Wie oben bereits angeführt, kann ein rein lateraler Versatz mit den vorgeschlagenen Mitteln, die den Strahl ablenken, erreicht werden, durch Ablenkung an zwei hintereinander befindlichen Positionen im Strahlengang, wobei mit der zweiten Ablenkung der von der ersten Ablenkung erzeugte Winkel kompensiert wird. Hierbei ist vorzugsweise die Synchronisation der Ablenkelemente zueinander zu beachten.

Alternativ oder ergänzend kann auch vorgesehen sein, dass das Beeinflussen des Laserstrahls mittels wenigstens der zumindest einen Phasenmaske zeitabhängig durchgeführt wird und dadurch die Energieverteilung, insbesondere deren Gestalt und/oder Position, zeitabhängig verändert wird.

Indem eine zeitabhängige Beeinflussung vorgenommen wird, kann die Energieverteilung beispielsweise entlang der Trajektorie des Fokus innerhalb des Materials bewegt werden. Es ist damit vorteilhaft möglich, in einer Ausführungsform das Maximum der Energieverteilung zeitlich zu verschieben und somit das Modifizieren des Substrats sogar entlang eines großen Dickenbereichs zuverlässig vorzunehmen.

Dies ist beispielsweise vorteilhaft, wenn der Linienfokus nicht entlang des gesamten Dickenbereichs eine ausreichend hohe Energieverteilung im Substratmaterial für das Einbringen einer Modifikationen in das Substratmaterial bereitstellen kann.

So kann eine Energieverteilung, mit der entlang eines Abschnitts der Fokus-Trajektorie ein für die Modifikationen notweniger Schwellenwert erreicht oder überstiegen wird, innerhalb des Substrats bewegt werden.

Wenn beispielsweise die Pulsenergie nicht ausreicht, um entlang des gesamten Dickenbereichs eine Energiedichte größer als ein für Modifikationen erforderlichen Schwellenwert zu erreichen, ist dies eine zuverlässige und einfache Möglichkeit, dennoch eine symmetrische Trennfläche selbst bei entsprechend großen Dicken auszugestalten.

Alternativ oder ergänzend kann auch vorgesehen sein, dass der Laserstrahl zu unterschiedlichen, vorzugsweise unmittelbar aufeinanderfolgenden, Zeiträumen durch unterschiedliche Bereiche der Phasenmaske beeinflusst wird, insbesondere der Laserstrahl, der Schwerpunkt des in der Ebene der Phasenmaske bestehenden Strahl-Querschnitts, während den unterschiedlichen Zeiträumen unterschiedliche Auftreffpunkte auf dieser hat.

Beispielsweise kann dazu der Versatz zeitlich gesteuert werden, also der Auftreffpunkt des Laserstrahls (bzw. der des Schwerpunkts des in der Ebene der Phasenmaske bestehenden Strahl-Querschnitts) auf der Phasenmaske. Dazu eignen sich die vorstehend genannten Mittel, indem sie zeitabhängig den Versatz verändern.

Beispielsweise kann die Phasenmaske zeitabhängig relativ zu dem Laserstrahl bewegt werden, so dass vorzugsweise für unterschiedliche Zeitpunkte der Versatz innerhalb der waagerechten Symmetrieebene der Phasenverteilung unterschiedlich ist.

Alternativ oder ergänzend kann auch vorgesehen sein, dass durch das zeitabhängige Beeinflussen die Energieverteilung, vorzugsweise zumindest ein Maximum der Energieverteilung, innerhalb des Substrats, insbesondere von einer größeren zu einer geringeren Tiefe und/oder entlang der Fokus-Trajektorie innerhalb des Substrats, bewegt wird.

Neben der bereits oben beschriebenen allgemeinen Möglichkeit, die Energieverteilung zu verschieben und damit selbst große Dickenbereiche modifizieren zu können, ist es alternativ oder ergänzend vorteilhaft, die Modifizierung durch eine entsprechende Bewegung der Energieverteilung, oder ihres Maximums oder Schwerpunkts, beispielsweise von unten nach oben, also insbesondere von der dem Laser abgewandten Seite des Substrats hin zur dem Laser zugewandten Seite des Substrats, in dem Substrat zu erzeugen. Dadurch bewegt sich vorzugsweise der Ort der aktuellen Modifikation von bisherigen Modifikationen fort. Somit wird der Linienfokus am aktuellen Ort nicht durch bereits in das Substrat eingebrachte Modifikationen beeinflusst. Dadurch kann sehr zuverlässig die Modifikation in das Substrat eingebracht werden.

Im Substrat "unten" kann dabei in Strahlrichtung der von der Laserquelle am weitesten entfernten Ort, den der Laserstrahl im Substrat durchläuft, sein. Im Substrat "oben" kann dabei in Strahlrichtung der von der Laserquelle am nächsten gelegenen Ort, den der Laserstrahl im Substrat durchläuft, sein.

So kann der Puls einer Strahlungsquelle vorzugsweise auch zeitlich in zwei oder mehr Teile geteilt werden, die die Phasenmaske mit geringen Zeitversatz an unterschiedlichen Orten treffen. Hierzu wird also ein einziger Puls zeitlich aufgeteilt und zum Beispiel der erste Teil wird auf eine erste Position der Phasenmaske gelenkt und der zweite Teil wird auf eine zweite Position der Phasenmaske gelenkt. Die Umlenkung kann dabei vorzugsweise durch eine der zuvor genannten Mittel erreicht werden, insbesondere über separate Strahlwege (auch als fixer Aufbau, dann bevorzugt über Spiegel). Alternativ oder ergänzend ist in diesem Zusammenhang auch die unten beschriebene SSTF bevorzugt.

Daher kann diese Art der dynamischen Fokussierung sehr bevorzugt sein, auch wenn die Pulsenergie für die Modifzierung in der gesamten Tiefe des Materials ausreicht. Denn in diesen Situationen besteht der Vorteil der dynamischen Fokussierung darin, dass die Ausprägung der Materialmodifikation im unteren Teil des Substrates nicht durch das Plasma im oberen Teil des Substrates behindert wird.

Diese Form der dynamischen Fokussierung kann aber auch besonders interessant sein, wenn die zur Verfügung stehende Pulsenergie nicht ausreicht, um das Substrat entlang seiner gesamten Dicke auf einmal zu modifizieren.

Denn gerade bei dickeren Substraten, aber auch ganz allgemein, kann die gesamte Schädigungszone damit im Substrat zusammengesetzt werden durch mehrere Einzelsubmodifikationen, erreicht jeweils durch einen Laserpuls auf einer anderen Position auf der, insbesondere kubischen, Phasenmaske. Besonders vorteilhaft ist es dabei, mit der tiefstgelegenen (in Strahlrichtung von der Laserquelle am weitesten entfernten) Einzelsubmodifikation im Substratmaterial zu beginnen, und die Position im Substrat sukzessive zu erhöhen.

Das vorgeschlagene Verfahren ist daher gerade bei Substraten mit einer Dicke von 500 µm oder größer, vorzugsweise von 1 mm oder größer, vorzugsweise von 3 mm oder größer, vorzugsweise von 5 mm oder größer, vorzugsweise von 7 mm oder größer, bevorzugt.

So können kleinere Laserquellen eingesetzt werden.

Alternativ oder ergänzend kann auch vorgesehen sein, dass das Beeinflussen des Laserstrahls mittels wenigstens der zumindest einen Phasenmaske aufweist, dass die Intensitätsverteilung des Laserstrahls, insbesondere innerhalb einer Pulsdauer, auf der Phasenmaske, insbesondere am Ort des Auftreffens des Strahls auf der Phasenmaske, verändert, insbesondere räumlich auf dieser verschoben, wird.

Damit wird sozusagen ein Bereich von elliptischer Form auf der Phasenmaske zeitabhängig unterschiedlich ausgeleuchtet. Da dies ohne mechanische Bewegung, sondern durch Modulation der Laserstrahl-Intensität erfolgten kann, ist dies sehr zuverlässig möglich. Außerdem lassen sich unerwünschte Effekte, die ein gezieltes Einstellen der Energieverteilung im Material be- oder verhindern, verhindern, indem die zeitliche Entwicklung der Energieverteilung im Material kontrolliert wird.

Diese simultane räumlich-zeitliche Pulsformung (SSTF) ist sehr daher bevorzugt.

Alternativ oder ergänzend kann auch vorgesehen sein, dass mittels der mittels zumindest eines Teils des Linienfokus eingebrachten Energieverteilung (a) das Substrat zumindest bereichsweise in einer Materialeigenschaft, wie insbesondere seiner Dichte, sein Brechungsindex, seine Spannungswerte und/oder seiner Ätzrate, modifiziert wird, (b) Mikrorisse zumindest bereichsweise in dem Substratmaterial erzeugt werden und/oder (c) zumindest bereichsweise Material von dem Substrat entfernt und/oder verdrängt wird,

wobei vorzugsweise in mehreren aufeinanderfolgenden Substratbereichen auf diese Weise das Substratmaterial entlang einer geraden oder beliebig geformten Kontur modifiziert, entfernt und/oder verdrängt, insbesondere das Substratmaterial in das umgebene Substratmaterial hineinverdichtet, wird.

Indem also das Substratmaterial in einer Eigenschaft verändert wird, wird die geplante Trennfläche bestimmt. Entsprechend ist auch die entsprechende Seitenfläche der Substratteile dadurch bestimmt.

Das Entfernen von Substratmaterial vom Substrat kann beispielsweise durch Verdampfen des Materials erfolgen. Das Verdrängen von Substratmaterial kann beispielsweise durch das Hineinverdichten von Substratmaterial in das umgebene Substrat erfolgen.

Die kontrollierte Energieverteilung kann daher allgemein als ein Mittel angesehen werden, mit dem im Substratmaterial die Modifikation, einschließlich einer Materialentfernung oder - verdrängung, erreicht wird. Denn die Energieverteilung wechselwirkt in einer hier nicht näher untersuchten und für das Verständnis der Erfindung nicht weiter relevanten Weise mit dem Substratmaterial, so dass es zu den finalen Modifikationen kommt.

Indem in mehreren Bereichen des Substrats entsprechendes Prozedere durchgeführt wird, können mehrere modifizierte Bereiche oder Bereiche mit entferntem/verdrängtem Substratmaterial erreicht werden. Durch diese wird sozusagen ein Korridor von Schädigungen vorgegeben, der gleichzeitig auch die geplante Trennfläche bestimmt. Beispielsweise kann durch mechanische oder thermische Einwirkung auf das Substrat das Trennen des Substrats in zwei Substratteile entlang der geplanten Trennfläche ausgelöst und/oder durchgeführt werden. Beispielsweise kann ein Riss in dem Korridor erzeugt und darin vorangetrieben werden. Alternativ oder ergänzend kann mit einem IR-Laser auf das Substrat eingestrahlt werden, um den Trennvorgang zu initiieren und/oder durchzuführen. Auch CO2-Cleaving ist eine bevorzugte Möglichkeit, um das Trennen des Substrats durchzuführen.

Die unterschiedlichen Bereiche können durch eine relative Verschiebung von Substrat und Linienfokus ausgewählt werden. Wenn die Verschiebung des Substrats um einen Zentimeter sehr viel mehr Zeit benötigt als die Pulsdauer des Lasers lang ist (beispielsweise mehr als das 100 fache), kann die Verschiebung vorzugsweise kontinuierlich stattfinden. Alternativ oder ergänzend kann eine maximal zulässige Verfahrgeschwindigkeit v auch ermittelt werden mit der Beziehung v = modification_size/Pulsabstand, worin die modification_size die maximale Ausdehnung der in das Substratmaterial einzubringenden Modifikation ist und der Pulsabstand der intraburst-Pulsabstand (beispielsweise 40 MHz) oder bei Einzelpulsen der Abstand zwischen zwei aufeinanderfolgende Pulse (beispielsweise 1/100 kHz) ist.

Vorzugsweise erfolgt die Verschiebung kontinuierlich mit einer Geschwindigkeit von 10 m/s oder weniger, vorzugsweise von 5 m/s oder weniger, vorzugsweise von 2 m/s oder weniger.

Unter einer Kontur wird dabei diejenige Kurve verstanden, die die Auftreffpunkte des Laserstrahls auf der Oberfläche des Substrats beschreiben. Die Kontur kann beispielsweise geradlinig oder kreisförmig sein, oder einen anderen, insbesondere beliebig gekrümmten, Verlauf aufweisen.

In einer Ausführungsform beträgt der, insbesondere maximale, Durchmesser der Materialmodifikation oder des Bereichs mit entferntem oder verdrängtem Material, insbesondere in einer Querschnittsebene senkrecht zur Haupterstreckungsrichtung der Modifikation, zwischen 1 μm und 100 μm, bevorzugt zwischen 1 μm und 50 μm, noch bevorzugter zwischen 1 μm und 20 μm, noch bevorzugter zwischen 1 μm und 10 μm.

Alternativ oder ergänzend kann auch vorgesehen sein, dass zwei oder mehr Linienfoki von zwei oder mehr Laserstrahlen innerhalb desselben Bereichs im Substrat, vorzugsweise zeitlich zumindest teilweise parallel und/oder zumindest teilweise sequentiell, entsprechend ausgebildet und die von ihnen in das Substrat eingebrachte Energieverteilung jeweils entsprechend kontrolliert werden, wobei vorzugsweise (a) die von den einzelnen Linienfoki eingebrachten Energieverteilung, insbesondere hinsichtlich Position und/oder Gestalt, unterschiedlich sind, wobei vorzugsweise die Maxima der einzelnen Energieverteilungen an unterschiedlichen Positionen innerhalb des Substrats bestehen, und/oder (b) die Trajektorien der zwei oder mehr Linienfoki deckungsgleich sind.

Wenn mehrere Laserstrahlen eingesetzt werden, kann eine einzelne Modifikation selbst in dicken Substraten sehr schnell erzeugt werden. Es muss nämlich keine mechanische Bewegung von Komponenten des optischen Aufbaus erfolgen, um einen einzelnen Laserstrahl zu beeinflussen, insbesondere um die Energieverteilung bzw. ihr Maximum im Substrat zu verschieben. Stattdessen kann beispielsweise ein erster Laserstrahl ein Maximum der Energieverteilung im unteren Bereich der Modifikation und ein zweiter Laserstrahl ein Maximum der Energieverteilung im oberen Bereich der Modifikation aufweisen (wobei "oben" vorzugsweise dort ist, wo der Laserstrahl auf das Substrat auftrifft).

In einer Ausführungsform werden mehrere Strahlen dazu eingesetzt werden, um das Substrat parallel an zwei oder mehr lateral zueinander beabstandeten Positionen zu modifizieren.

Wenn die Strahlen, insbesondere Pulse, verschiedener Laserquellen eingesetzt werden, so sind die Laserquellen vorzugsweise gleichartige Laserquellen. Damit sind besonders gleichmäßige Modifikationen erzielbar.

Alternativ oder ergänzend kann auch vorgesehen sein, dass die Orientierung zumindest eines Abschnitts des Linienfokus innerhalb des Substrats relativ zur Hauptausbreitungsrichtung des Laserstrahls im Substrat durch das Kontrollieren der Energieverteilung innerhalb des Substrats und ferner durch Anpassen der Fokuslage im Substratmaterial eingestellt wird, wobei vorzugsweise das Anpassen der Fokuslage durch eine Änderung des Abstandes zwischen einer Fokussierungsoptik und Substrat erfolgt und/oder die Dicke des Substrats kleiner ist als die halbe für einen gegebenen optischen Aufbau potenziell mögliche Länge des Linienfokus entlang der Dickenerstreckung des Substrats, wobei vorzugsweise die Pulsenergie und/oder der Strahldurchmesser so gewählt sind, dass das Substrat in seiner gesamten Tiefe modifiziert wird oder nicht in seiner gesamten Tiefe modifiziert wird.

Da mit der Entfernung des Maximums der Energieverteilung vom Scheitelpunkt der Fokus-Trajektorie, insbesondere Airy-Fokus-Trajektorie, eine Änderung der lokalen Ausrichtung des Linienfokus relativ zur Strahlpropagationsrichtung bzw. Substratoberfläche einhergeht, kann mit einem kombinierten Strahlversatz, wie er für bevorzugte Ausführungsformen oben beschrieben wurde, und einer gleichzeitigen Anpassung der Fokuslage im Substratmaterial, beispielsweise also mit der erwähnten Änderung des Abstandes zwischen Fokussierungsoptik und Substrat oder einer Brennweitenänderung der fokussierenden Optik, eine Anpassung der Winkelausrichtung der Schädigungszone im Material vorgenommen werden.

Auf diese Art und Weise kann bei dünnen Gläsern ein kleiner Ausschnitt der Airy-Trajektorie benutzt werden, um einen, zumindest näherungsweise, geraden Linienfokus mit einstellbaren Winkel zur Propagationsrichtung zu erzeugen.

Dabei ist es bevorzugt, dass die Substratdicke, entlang derer der Linienfokus ausgebildet wird, mindestens geringer ist als die halbe Ausdehnung der, insbesondere theoretisch und/oder praktisch, verfügbaren Fokus-Trajektorie in Glasdickenrichtung.

Beispielsweise sind Substrate mit einer Dicke von 500 $\mu$m oder weniger, vorzugsweise von 300 $\mu$m oder weniger, vorzugsweise von 100 $\mu$m oder weniger, vorzugsweise von 50 $\mu$m oder weniger, hierbei besonders bevorzugt. Alternativ oder ergänzend kann die Dicke auch zwischen 300 mm und 1000 $\mu$m betragen.

Der gekrümmte Linienfokus kann, insbesondere mit den vorstehend genannten Mitteln, beispielsweise mit Längen von mehr als 0,1 mm bis hin zu mehr als 3 mm, vorzugsweise von zwischen 0,1 mm und 5 mm, insbesondere von zwischen 0,5 mm und 3 mm, und/oder einer maximalen Auslenkung von der geraden Fokallinie von 500 $\mu$m, vorzugsweise von zwischen 10 $\mu$m und 200 $\mu$m, insbesondere von zwischen 20 $\mu$m und 80 $\mu$m, erzeugt werden.

Die räumliche Gestalt Krümmung und damit die räumliche Gestalt des beeinflussten Substratmaterials, ist abhängig von bzw. mitbestimmbar durch diese maximale Auslenkung, die auch als Profilhub bezeichnet werden kann.

Für die Einstellung der maximalen Auslenkung bzw. des Profilhubs kann die numerische Apertur A = n * sin (ALPHA) der fokussierenden Optik eingestellt und/oder angepasst werden. Allgemein gilt dabei: Je größer die numerische Apertur der fokussierenden Optik gewählt wird, desto kürzer wird die Länge des ausgebildeten Fokus und - im exemplarischen Falle eines Airy-Strahls - desto höher ist die Krümmung des Airy-Strahls in Fokusnähe.

Für den gekrümmten Linienfokus bedeutet dies, dass mit geringer werdender Dicke des Substrats die lokale Krümmung des Linienfokus erhöht werden muss, um einen nennenswerten Profilhub an der Trennfläche zu erzeugen.

Alternativ oder ergänzend kann auch vorgesehen sein, dass

(i) der Linienfokus ein Fokus eines Airy-Strahls ist,

(ii) der Linienfokus eine maximale Auslenkung von einem geraden Verlauf aufweist, die mehr als 20 $\mu$m, mehr als 40 $\mu$m, mehr als 60 $\mu$m, mehr als 80 $\mu$m oder mehr als 100 $\mu$m beträgt,

(iii) der Laserstrahl von einem gepulsten Laser ausgesendet wird,

(iv) die Wellenlänge des Laserstrahls ausgewählt ist aus dem Wellenlängenbereich von zwischen 200 nm und 1500 nm, vorzugsweise die Wellenlänge 343 nm, 355 nm, 515 nm, 532 nm, zwischen 750 nm und 850 nm, 1030 nm und/oder 1064 nm beträgt , das Mikroskopobjektiv bzw. die Fourierlinse einer Fokussieroptik, mit der vorzugsweise der Laserstrahl auf das Substrat fokussiert wird, eine Brennweite von 10-20 mm aufweist, der Koeffizient der kubischen Phase (Laser-Parameter Beta) einen Wert von zwischen $0{,}5\times10^3$/m und $5\times10^3$/m aufweist, der Durchmesser des Rohstrahls (Laser-Parameter $\omega_0$) einen Wert von zwischen 1 mm und 10 mm, vorzugsweise von zwischen 2,5 mm und 5 mm, aufweist, die Pulsdauer (Laser-Parameter $\tau$) einen Wert von 0,1-10 ps aufweist, die Pulsenergie (Laser-Parameter $E_p$) einen Wert von zwischen 1 und 1.500 $\mu$J, vorzugsweise von zwischen 30 und 500 $\mu$J, insbesondere 474 $\mu$J, aufweist, und/oder die Anzahl der Pulse im Burst (Laser-Parameter N) einen Wert von zwischen 1 und 200, vorzugsweise von zwischen 1 und 100, insbesondere von zwischen 1 und 8, aufweist, und/oder

(v) die Pulsenergie des Lasers nur dazu ausreicht, entlang eines bestimmten Abschnitts des Linienfokus das Substrat in wenigstens einer Materialeigenschaft zu modifizieren oder Material von dem Substrat zu entfernen oder zu verdrängen, wobei der Abschnitt kürzer ist als die Ausdehnung des Substratbereichs, der in seiner Materialeigenschaft modifiziert oder der entfernt oder verdrängt werden soll.

Ein Airy-Strahl lässt sich zuverlässig erzeugen und weist einen gekrümmten Linienfokus auf.

Ein Laserstrahl, dessen Linienfokus vorliegend eingesetzt wird, kann mit bekannten Mitteln entlang eines optischen Pfades gelenkt und kontrolliert werden. Der Linienfokus kann mit unterschiedlichen Mitteln, wie optischen Elementen, eingestellt und angepasst werden. Damit kann ein elektromagnetisches Feld innerhalb des Substratkörpers erzeugt werden, das jede räumliche Gestalt annehmen kann, die mit Mitteln der Strahlformung und Strahlbeeinflussung erzielbar ist. Vorzugsweise wird ein Airy-Strahl erzeugt.

Ein Laserstrahl mit Linienfokus stellt damit ein äußerst flexibles Mittel dar, das Substrat in einem gekrümmten Bereich zu modifizieren.

Bei der Bearbeitung von Substratkörpern mittels Laser ist generell zwischen Prozessen linearer und nichtlinearer Absorption zu unterscheiden. Lineare Absorption liegt vor, wenn das zu bearbeitende Material für die Wellenlänge des verwendeten Lasers teil- oder komplettabsorbierend ist (Bsp.: Absorption von CO2-Laserstrahlung in Glas), so dass entsprechend über Laserwellenlänge, -energie, Pulsdauer und dergleichen die Stärke der Wechselwirkung eingestellt werden kann. Hiervon zu unterscheiden sind die Prozesse der nichtlinearen Absorption, bei der das zu bearbeitende Material im Bereich der verwendeten Laserstrahlung zunächst keine Absorption aufweist, also transparent für die Laserwellenlänge(n) ist. Durch Erzeugen sogenannter ultrakurzer Laserpulse (typische Pulslängen bewegen sich hierbei im Bereich 10 ps bis 100 fs, insbesondere im Bereich 1 ps bis 100 fs) können aber im Substratmaterial durch den Laser ausreichend hohe Intensitäten erzeugt werden, für die nichtlineare optische Effekte relevant werden. Diese können beispielsweise eine Änderung der effektiven Brechzahl oder das Erzeugen eines Plasmas im Substratmaterial umfassen. Wird dabei genug Energie in geeigneter Verteilung im Material deponiert, so erzeugt der Laserstrahl eine bleibende Beeinflussung im Material. Die hierdurch erzeugten lokalen Änderungen des Materials erstrecken sich von permanenten Änderungen des Brechungsindex, Änderung des Ätzverhaltens (selektives Laseretching) bis hin zum Erzeugen von Rissen und Kanälen im Substrat, jeweils abhängig von dem Zusammenspiel der Laser- und Materialparameter und begrenzt auf wenigstens einen Bereich des gebildeten Laserfokus im Material.

Die Erfinder gehen bisher davon aus, dass die im Substrat deponierte Energie einerseits als Ergebnis der nichtlinearen Wechselwirkung des elektromagnetischen Felds des Laserpulses mit dem Substratmaterial und andererseits als Ursache der Modifikation im Substrat angesehen werden kann. Ohne Betrachtung der spezifischen Schädigungsmechanismen im Material kann daher die deponierte Energie, die mit geeigneten Modellen für die nichtlineare Laserpulspropagation simuliert werden kann, als Stellvertreter für die Ausprägung der Materialmodifikation genutzt werden.

Beispielsweise liegt die kritische Intensität für ein Glassubstrat, um darin eine nichtlineare Änderung von Materialeigenschaften, insbesondere aber ein zur Materialbearbeitung geeignetes Plasma, hervorzurufen, bei wenigs-tens $10^{13}$ W/cm$^2$. In einer Ausführungsform weist das Substratmaterial Glas auf und das elektromagnetische Feld des Lasers weist eine Feldstärke von wenigstens $10^{13}$ W/cm$^2$, vorzugsweise von wenigstens $5 \times 10^{13}$ W/cm$^2$, vorzugsweise von wenigstens $10^{14}$ W/cm$^2$, am bevorzugtesten von wenigstens $5 \times 10^{14}$ W/cm$^2$ auf. Optional weist das elektromagnetische Feld eine Feldstärke von maximal $10^{16}$ W/cm$^2$ auf.

Ein möglicher Aufbau zur erfindungsgemäßen Erzeugung eines gekrümmten Linienfokus kann im Prinzip wie folgt gestaltet werden: Der Laserstrahl eines Ultrakurzpulslasers trifft auf ein diffraktives optisches Element (DOE), der die Phase des einfallenden Laserstrahls (Laserpulses) durch Aufprägen einer Phase, wie eine kubische Phase, anpasst. Anschließend wird der Strahl durch ein Mikroskopobjektiv und/oder auf eine Fourierlinse auf den zu strukturierenden Substratkörper fokussiert. Abhängig von der sich einstellenden Phasenverteilung hinter dem DOE erzeugt das abbildende Objektiv nun nicht mehr eine gerade, sondern eine gekrümmte Fokallinie. In einer Ausführungsform können auch die Nebenmaxima des Airy-Strahls unterdrückt werden. Dabei kann das Intensitäts-Verhältnis des Hauptfokus zum Rest des Strahls optimiert werden (1,2 -10). Das kann beispielsweise realisiert werden durch die nicht radialsymmetrischen Apodisierung in der Fourier-Ebene mittels einer Blende.

Beispielsweise hat ein als Phasenmaske eingesetztes DOE einen Durchmesser von 5-15 mm, vorzugsweise 9 mm, wobei das DOE in der "Front focal plane" des Mikroskopobjektivs bzw. der Fourierlinse liegt. Vorzugsweise hat das DOE (oder allgemein gesprochen die Phasenmaske) einen Arbeitsabstand von der betreffenden Linse, der gleich der Brennweite der Linse ist und/oder zwischen 2-15 mm, vorzugsweise 5 mm, beträgt. Wenn bei einem Mikroskopobjektiv die "front focal plane" im Objektiv selbst liegt, ist in diesen Fällen vorzugsweise der minimal (baulich bedingte) Abstand zu wählen.

Beispielsweise kann vorliegend ein Airy-Strahl zum Einsatz kommen. Ein Airy-Strahl eignet sich besonders gut für eine asymmetrisch/seitlich Strahlzuführung.

Ein Airy-Strahl lässt sich außerdem besonders einfach und effizient erzeugen. Beispielsweise kann sich ein Airy-Strahl als Abbildung eines Strahls mit kubischer Phase ergeben.

Durch geeignete Wahl des optischen Setups (insbesondere Festlegen des vertikalen Abstandes zwischen fokussierender Optik und zu dem zu bearbeitenden Substratmaterial, also der Fokuslage und -länge), können auf diese Art und Weise gekrümmte Modifikationen im Innern oder auch eine der beiden oder beide Großflächen (Grund- und/oder Deckfläche) durchstoßend im Substratmaterial hergestellt werden.

Wenn die Pulsenergie größer als ein vom Material des Substrats abhängiger Schwellenwert ist, kann eine nichtlineare Wechselwirkung zwischen Laser und Material stattfinden, die zu den besprochenen Modifikationen führen kann. Daher ist ein einer Ausführungsform bevorzugt, dass die Pulsenergie größer als ein vom Material des Substrats abhängiger Schwellenwert ist, so dass eine nichtlineare Wechselwirkung zwischen Laser und Material stattfindet.

Alternativ oder ergänzend kann auch vorgesehen sein, dass die innerhalb des Substrats modifizierten Bereiche durch Erzeugen einer mechanischen und/oder thermischen Spannung und/oder durch ein Ätzverfahren geöffnet werden, insbesondere um ein Durchgangsloch und/oder ein Sackloch innerhalb des Substratmaterials zu erzeugen, und/oder

dass entlang einer geschlossenen Kontur und/oder entlang einer von Substratseite zu Substratseite verlaufenden Modifikation durch mechanische, thermische und/doer chemische Prozesse geöffnet werden, insbesondere um eine Innen- oder Außenkontur mit geformter Seitenfläche zu erzeugen.

Bei dem ersten Aspekt der Erfindung kann ergänzend auch vorgesehen sein, dass

(i) das Substrat transparent ist, aus Glas ist, eine erste Deckfläche aufweist und/oder eine zweite Deckfläche, die vorzugsweise parallel zur ersten Deckfläche verläuft und/oder ihr gegenüberliegt, aufweist, und/oder

(ii) das Substrat eine, vorzugsweise zwischen der ersten und zweiten Deckfläche gemessene, Dicke aufweist

(a) von 10 µm oder mehr, vorzugsweise von 30 µm oder mehr, vorzugsweise von 50 µm oder mehr, vorzugsweise von 70 µm oder mehr, vorzugsweise von 100 µm oder mehr, vorzugsweise von 300 µm oder mehr, vorzugsweise von 500 µm oder mehr, vorzugsweise von 700 µm oder mehr, vorzugsweise von 1 mm oder mehr, vorzugsweise von 3 mm oder mehr, vorzugsweise von 5 mm oder mehr, vorzugsweise von 7 mm oder mehr, vorzugsweise von 10 mm oder mehr,

(b) von 10 mm oder weniger, vorzugsweise von 7 mm oder weniger, vorzugsweise von 5 mm oder weniger, vorzugsweise von 3 mm oder weniger, vorzugsweise von 1 mm oder weniger, vorzugsweise von 700 µm oder weniger, vorzugsweise von 500 µm oder weniger, vorzugsweise von 300 µm oder weniger, vorzugsweise von 300 µm oder weniger, vorzugsweise von 200 µm oder weniger, vorzugsweise von 100 µm oder weniger, vorzugsweise von 70 µm oder weniger, vorzugsweise von 50 µm oder weniger, vorzugsweise von 30 µm oder weniger, vorzugsweise von 10 µm oder weniger, und/oder

(c) von zwischen 10 µm und 10 mm, vorzugsweise von zwischen 10 µm und 500 µm, vorzugsweise von zwischen 50 µm und 200 µm.

Kurzbeschreibung der Figuren

Weitere Merkmale und Vorteile der Erfindung ergeben sich aus der nachfolgenden Beschreibung, in der bevorzugte Ausführungsformen der Erfindung anhand schematischer Zeichnungen erläutert werden.

Dabei zeigen:

Fig. 1      einen optischen Aufbau zum Durchführen des Verfahrens;

Fig. 2      eine kubische Phasenmaske;

Fig. 3      ein Substrat mit einem modifizierten Substratbereich;

Fig. 4      den simulierten Verlauf der Linienenergiedichte entlang eines Linienfokus in einem Substrat für unterschiedliche Pulsenergien;

Fig. 5      den Verlauf der Tiefenposition des experimentell bestimmten Maximums der Materialmodifikation für unterschiedliche Pulsenergien;

Fig. 6      den Einfluss des Versatzes eines Laserstrahls auf der kubischen Phasenmaske auf die Position des Maximums der Fokus-Intensität bzw. der Energieverteilung entlang der Fokus-Trajektorie;

Fig. 7      den Verlauf der Abhängigkeit zwischen dem Versatz eines Laserstrahls auf der kubischen Phasenmaske und die Position des Maximums der Linienenergiedichte entlang der Fokus-Trajektorie;

Fig. 8      den Einfluss der Brennweite der Fokussieroptik bei einem Laserstrahl;

Fig. 9a-c     verschiedene Möglichkeiten zur Herstellung eines Strahlversatzes; und

Fig. 9d     eine Realisierungsform der Auslenkungsoptik in Fig. 9c.

<u>Beispiele</u>

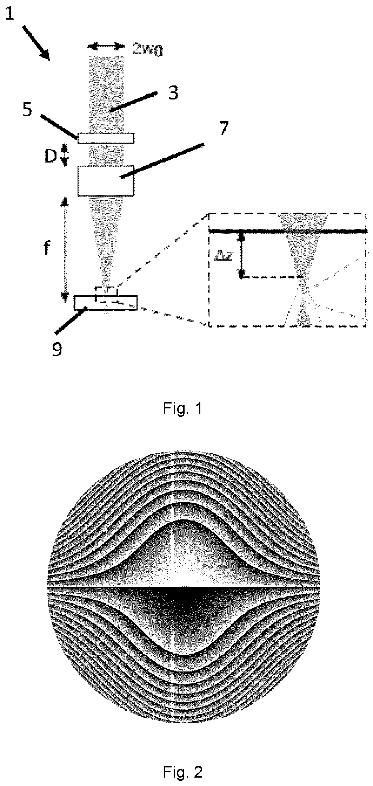

Figur 1 zeigt einen optischen Aufbau 1 zum Durchführen des Verfahrens gemäß dem ersten Aspekt der Erfindung.

Der optische Aufbau 1 weist einen (nicht dargestellten) gepulsten Laser auf, der einen Laserstrahl 3 mit einer Wellenlänge von 1030 nm emittiert. Der Laserstrahl 3 hat einen Durchmesser von $2\omega_0$. Der optische Aufbau weist ferner eine kubische Phasenmaske 5 und eine davon im Abstand D beabstandet angeordnete Fokussieroptik 7 mit Fokuslänge f von beispielsweise 10 mm auf. Phasenmaske 5 und Fokussieroptik 7 erzeugen aus dem Laserstrahl 3 einen Airy-Strahl, der einen gekrümmten Linienfokus aufweist. Der Laserstrahl 3 durchläuft dazu die Phasenmaske 5 und anschließend die Fokussieroptik 7.

Im Abstand der Fokuslänge f von der Fokussieroptik 7 entfernt ist ein entlang einer geplanten Trennfläche zu trennendes Substrat 9 derart angeordnet, dass der gekrümmte Linienfokus des Laserstrahls 3 innerhalb des Substrats ausgebildet wird.

Fig. 2 zeigt eine kubische Phasenmaske, wie sie für die Phasenmaske 5 zum Einsatz kommen kann.

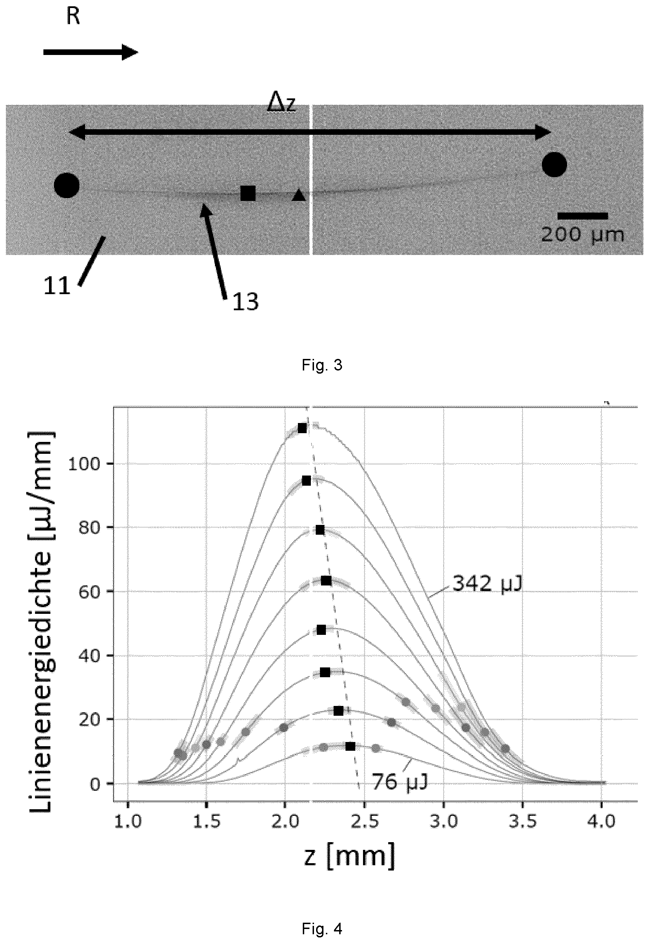

Fig. 3 zeigt ein Schnitt durch einen Ausschnitt eines Substrats 11 mit einem Substratbereich 13, innerhalb dessen das Substratmaterial durch einen gekrümmten Linienfokus eines Airy-Strahls in seinem Brechungsindex modifiziert wurde.

Konkret wurde dazu ein Puls mit einer Pulsenergie von 342 µJ eingesetzt und, wie es in Bezug auf Fig. 1 beschrieben wurde, ein Airy-Linienfokus im Substrat 11, nämlich Borofloat 33, ausgebildet. Der Laserstrahl hatte dabei eine Hauptpropagationsrichtung R.

Entlang eines Abschnitts des Linienfokus, innerhalb dessen überall eine ausreichend hohe Energiedichte durch diesen in das Substrat eingebracht wurde, um das Material zu modifizieren, wurde dieses modifiziert. Die Kreisflächen an den beiden Außenpositionen der Modifikation 13 kennzeichnen die experimentelle Nachweisgrenze der Modifikation 13. Die beiden Außenpositionen weisen entlang des Tiefenbereichs des Substrats 11, also entlang der Dicke des Substrats 11, einen Abstand von $\Delta z$ auf.

Außerdem ist in Fig. 3 auch der Ort, an dem das Maximum der durch den Linienfokus eingebrachte Energieverteilung bestand, und mithin eine maximale Modifikation des Substratmaterials auftrat, durch ein Quadrat gekennzeichnet. Der Scheitelpunkt des gekrümmten Bereichs ist mit einem Dreieck gekennzeichnet. Es zeigt sich, dass Scheitelpunkt und Ort der maximalen Modifikation nicht zusammenfallen.

Fig. 4 zeigt den simulierten Verlauf der Linienenergiedichte entlang eines Linienfokus in einem Substrat für unterschiedliche Pulsenergien. Damit kann zumindest qualitativ die Wirkung der Pulsenergie auf die Energieverteilung im Substrat illustriert werden.

So kann Figur 4 der Ort der maximalen Linienenergiedichte entlang des Fokus des (hier simulierten) Airy-Beams entnommen werden, der innerhalb des Substrats für keine Pulsenergie mit der Lage des Scheitelpunktes der Fokus-Trajektorie bei 2,5 mm übereinstimmt. Die maximale Modifikation im Substrat entsteht bevorzugt am Ort des Maximums der Energieverteilung im Substrat.

Wie dem Diagramm der Fig. 4 entnommen werden kann, weist für eine Pulsenergie von 76 µJ (unterste Kurve im Diagramm) die Linienenergiedichte einen Maximalwert von ca. 12 µJ/mm bei einer Tiefe von ca. 2,4 mm auf. Für eine Pulsenergie von 342 J (oberste Kurve im Diagramm) weist die Linienenergiedichte einen Maximalwert von ca. 118 µJ/mm bei einer Tiefe von ca. 2,1 mm auf. Der Maximalwert der Linienenergiedichte ist in Entsprechung zu Fig. 3 jeweils mit einem Quadrat gekennzeichnet. Mit zunehmender Pulsenergie nimmt folglich der Maximalwert der Linienenergiedichte zu. Außerdem verschiebt sich die Position des Maximums mit zunehmender Pulsenergie in Richtung geringerer Tiefen. Dabei ist hier die Tiefe von 0 mm auf die Substratoberfläche bezogen, also der der Laserquelle zugewandten Substratseite.

Außerdem lässt sich, gekennzeichnet durch jeweils zwei Kreisflächen, für jede der Pulsenergien der Tiefenbereich ablesen, innerhalb dessen eine Modifikation in einem exemplarischen Glasmaterial auftreten würde. Die Modifikation verläuft bei einer Pulsenergie von 76 µJ entlang eines Tiefenbereichs $\Delta z$ von ca. 0,3 mm und bei einer Pulsenergie von 342 µJ entlang eines Tiefenbereichs $\Delta z$ von ca. 2 mm und. Die Länge des die Modifikation erzeugenden Linienfokus zwischen den beiden Endpunkten ist dabei aufgrund seiner Krümmung größer als der Abstand $\Delta z$ der beiden Punkte in Tiefenrichtung.

Es ist festzustellen, dass mit zunehmender Energie des Pulses die Modifikation zunehmend asymmetrischer ausgeprägt wird und der Ort der maximalen Schädigung sich zunehmend vom Scheitelpunkt der Airy-Trajektorie bei 2,5 mm entfernt, hin zu geringeren Tiefen.

Damit illustriert Fig. 4, wie durch ein Einstellen der Pulsenergie der durch den Linienfokus in das Substratmaterial eingebrachte Energieverteilung kontrolliert werden kann. Nämlich etwa in Form der maximalen Linienenergiedichte aber auch in Form der Länge des Abschnitts des Linienfokus, entlang dessen das Substratmaterial in dem Tiefenabschnitt Δz modifiziert wird.

In Bezug auf Fig. 4 wurde von der Linienenergiedichte gesprochen. Diese bezog sich dabei auf die Energiedichte entlang der Fokus-Trajektorie des Airy-Strahls. Der Fachmann versteht, dass diese Darstellung vor allem zum besseren Verständnis dient, wie sich eine bestimmte Einstellung der Pulsenergie auf die (räumliche) Energieverteilung im Substrat auswirkt. Denn die tatsächliche Energieverteilung im Substrat, welche die Modifikationen erzeugt, wird zwar grundsätzlich durch die hier diskutierten Linienenergiedichte des Fokus mitbestimmt. Aber eben auch weitere Aspekte können einen Einfluss auf die Energieverteilung im Substrat nehmen. Beispielsweise kann es, etwa aufgrund von Absorption und Defokussierung durch das im Material erzeugte Plasma, auch Plasma-Shielding genannt, eine obere Wertegrenze für das Maximum der Energiedichte im Substrat geben, die auch durch eine Erhöhung der Linienenergiedichte des Fokus nicht überschritten werden kann, dieser Effekt wird auch als Intensity Clamping bezeichnet.

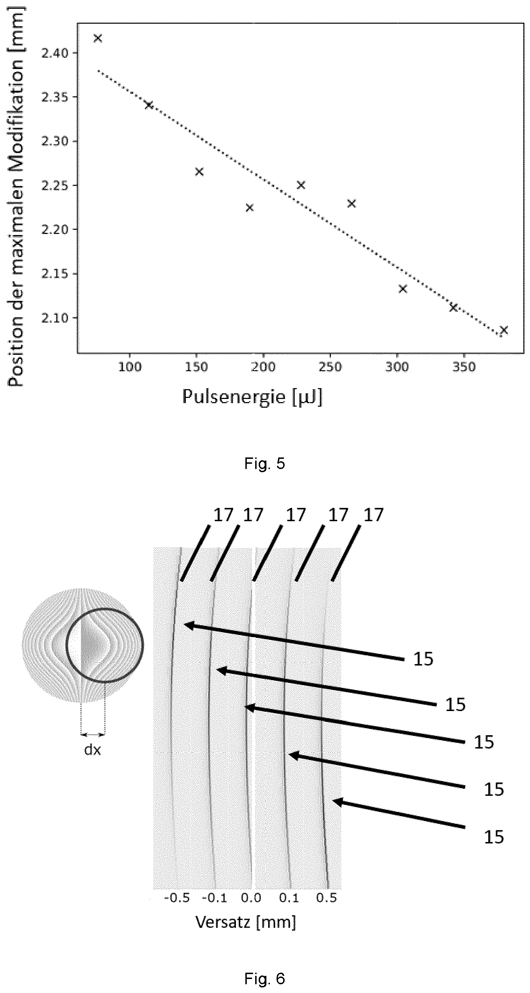

In Fig. 5 ist der Verlauf der Tiefenposition des experimentell bestimmten Maximums der Materialmodifikation für unterschiedliche Pulsenergien dargestellt.

Dazu wurden mehrere Modifikationen in ein Substrat eingebracht, wobei für jede Modifikation eine unterschiedliche Pulsenergie eingestellt wurde. Anschließend wurde für jede Modifikation die Position des Maximums der Modifikation ermittelt, wobei angenommen werden kann, dass dies auch die Position des Maximums der Linienenergiedichte ist. Für alle Modifikationen war der Scheitelpunkt des zugehörigen Linienfokus auf gleicher Tiefe eingestellt.

Wieder sind vor allem relative Aussagen bei Vergleich zweier Positionen möglich. Mit zunehmender Pulsenergie ändert sich demnach die Tiefe des Maximums (hin zu geringeren Tiefen), wobei der Verlauf annähernd linear ist.

Figur 6 zeigt den Einfluss des Versatzes eines Laserstrahls auf der kubischen Phasenmaske auf die Position des Maximums der Fokus-Intensität und damit effektiv auch die der Energieverteilung im Substrat entlang der Fokus-Trajektorie.

Das heißt, vorliegend wurde mittels Simulation der Effekt eines Versatzes zwischen Eingangsstrahl und kubischer Phasenmaske auf die relative Positionierung von Maximum der Energieverteilung und Scheitelpunkt der Airy-Trajektorie untersucht.

Bei zentriertem Eingangsstrahl wird zu Illustrationszwecken festgelegt, dass die Position von Scheitelpunkt und Maximum der Energieverteilung übereinstimmen. (Tatsächlich würde dies dem Fall entsprechen, dass der Linienfokus und die Energieverteilung im Vakuum betrachtet wird.) Freilich ist dies bei Ausbildung des Linienfokus im Substratmaterial nicht gegeben, sondern es kann eine Abweichung des Orts des Scheitelpunktes und des Orts des Maximums vorliegen. Mit zunehmendem Versatz (gekennzeichnet durch dx im linken Teil der Fig. 6) des Eingangsstrahls (gekennzeichnet durch einen Kreis) innerhalb der hier waagerechten Symmetrieebene (Spiegelebene) der Phasenverteilung, wird der Ort des Maximums der Energieverteilung gegenüber dem Scheitelpunkt der Airy-Trajektorie verschoben.

Im rechten Teil der Fig. 6 ist gezeigt, wie bei Veränderung des Versatzes von -0,5 mm bis 0,5 mm die Energieverteilung 15 entlang der Airy-Linienfokus-Trajektorie 17 in Fig. 6 von oben nach unten verschoben wird.

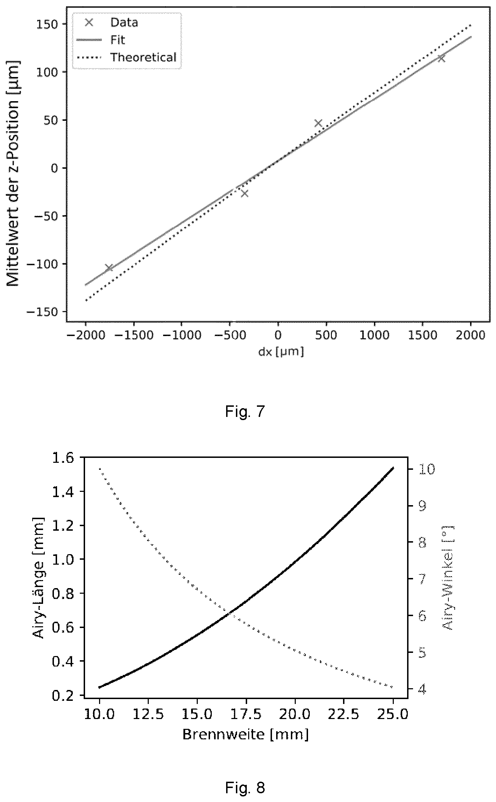

Fig. 7 zeigt den Verlauf der Abhängigkeit zwischen dem Versatz dx eines Laserstrahls auf der kubischen Phasenmaske von deren Sattelpunkt und die Position des Maximums der Linienenergiedichte entlang der Fokus-Trajektorie.

Hierbei wurde als experimentelle Lage der Mittelwert der z-Positionen (also der Tiefenpositionen) der zugehörigen Materialmodifikationsendpunkte verwendet (welche etwa in Fig. 3 durch Kreisflächen gekennzeichnet wurden).

Die Steigung des Fits ("Fit"; durchgezogene Linie in Fig. 7) an die experimentellen Daten ("Data") beträgt 0,065. Das heißt für die den Daten zugrundeliegende Fokussierung wird pro Verschiebung des Strahls auf der kubischen Phasenmaske um einen Millimeter ein Fokusversatz in z-Richtung (in Luft) von 65 μm erreicht.

In Fig. 7 ist außerdem der theoretisch zu erwartende Verlauf gepunktet dargestellt. Der theoretische Verlauf für einen Versatz von dx ergibt sich als Brennweitenänderung df der kubischen Phasenmaske nach der hier nochmals angegebenen Gleichung:

$$df = \frac{1}{\frac{1}{f_0} + \frac{\sqrt{2}\beta^3 dx}{k_0}} - f_0$$

Hierbei sind:

- $k_0$ der Wellenvektor mit $k_0 = 2\pi n/\text{Lambda}$, mit Wellenlänge Lambda, hier 1030 nm, und Brechzahl n des Mediums, innerhalb dem der Fokus ausgebildet wird, hier n=1
- $f_0$ die Brennweite der Fokussieroptik, hier 10 mm
- Beta ist der Skalierungsfaktor der kubischen Phase phi, mit

$$\varphi = exp(\frac{i\beta}{3} * (x^3 + y^3))$$

hier mit $\beta = 3^{1/3} mm^{-1}$ für x und y in mm.

Die Ausführungen zeigen, und damit nochmals in Bezug auf Figur 1: Indem der Laserstrahl 3 durch die Phasenmaske 5 beeinflusst wird, indem diese beispielsweise relativ zu dem Laserstrahl 3 verschoben wird, und indem die Pulsenergie des Laserstrahls 3 eingestellt wird, kann somit die durch den Linienfokus in das Substrat eingebrachte Energieverteilung zuverlässig kontrolliert werden. Damit lassen sich Modifikationen im Substrat 9 zuverlässig und symmetrisch ausbilden.

Vor allem durch die aufeinander abgestimmte Wahl von Pulsenergie und Beeinflussung des Laserstrahls durch die Phasenmaske (etwa durch die Wahl des Versatzes des Laserstrahls von dem Sattelpunkt der Phasenmaske), kann die Lage des Maximums der Energieverteilung innerhalb des Substrats (in der vergrößerten Teildarstellung der Fig. 1 durch ein Δz gekennzeichnet) zuverlässig kontrolliert werden.

Einfluss der Brennweite der Fokussieroptik

Fig. 8 illustriert den Einfluss der Brennweite der Fokussieroptik bei einem Airy-Laserstrahl. Für konstante

- Kubische Phase (mit beta = $3^{1/3}$ x $10^3$/m);

- Laserwellenlänge (mit lambda = 1,030 x $10^{-6}$ m); und

- Strahldurchmesser (Durchmesser des Rohstrahls $w_0$ = 5 x$10^{-3}$ m)

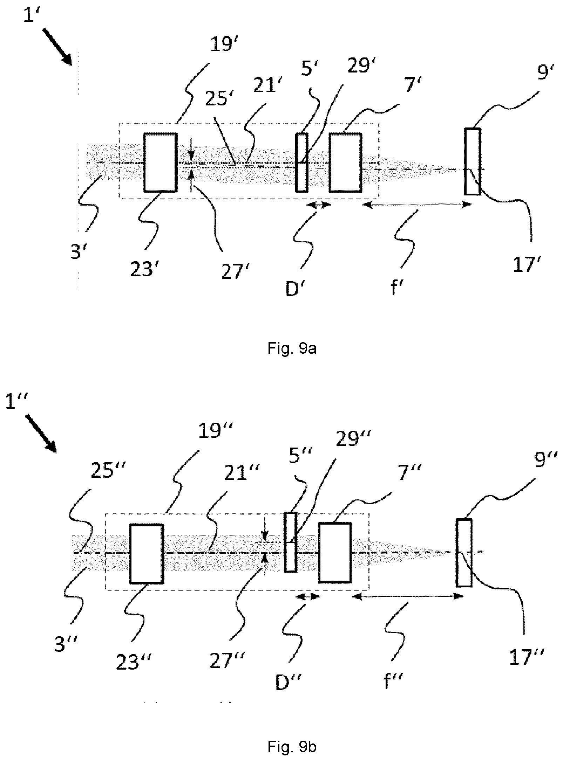

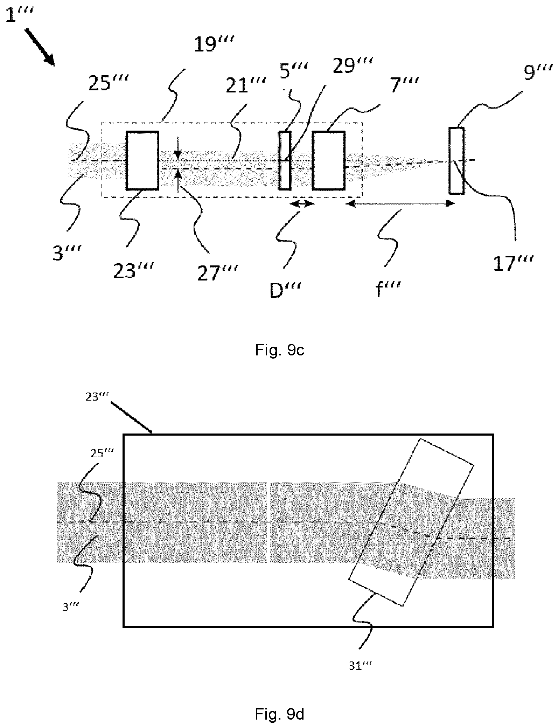

nimmt die Länge des Fokusbereichs (in relativer Definition: Abfall auf $1/e^2$ des Maximalwerts) mit steigender Brennweite zu (Kurve mit durchgezogener Linie in Fig. 9) und der Winkel, den der Fokus am oberen und unteren Ende jeweils zur optischen Achse hat, ab (Kurve mit gestrichelter Linie in Fig. 9). Die linke Ordinate bezieht sich folglich auf die durchgezogene Linie und die rechte Ordinate bezieht sich auf die gestrichelte Linie.

Beispiele zur Herstellung eines Strahlversatzes

Fig. 9a-c zeigen verschiedene Möglichkeiten zur Herstellung eines Versatzes des Laserstrahls auf einer Phasenmaske. Dabei kann angenommen werden, dass sich der Sattelpunkt der Phasenfunktion auf der jeweiligen Phasenmaske und damit der Zentralpunkt jeweils am geometrischen Mittelpunkt der jeweiligen Phasenmaske befindet.

Fig. 9a zeigt einen optischen Aufbau 1', der ähnlich zu dem in Fig. 1 gezeigten optischen Aufbau 1 ist. Daher sind gleiche Merkmale auch mit gleichen, jedoch einfach gestrichenen, Bezugszeichen versehen.

In Fig. 9a ist das optische System mit 19' gekennzeichnet und dessen optische Achse mit 21'. Das optische System 19' weist neben der Phasenmaske 5' und der Fokussierungsoptik 7' auch eine Auslenkungsoptik 23' auf.

Durch diese Auslenkungsoptik 23' wird der Laserstrahl 3' abgelenkt, so dass er schräg zur optischen Achse 21' verläuft. Dies ist gut an der Mittelachse 25' des Strahls 3' zu erkennen, die nach der Auslenkungsoptik 23' schräg (und nicht mehr parallel zur optischen Achse 21') verläuft.

Aufgrund der Ablenkung trifft der Laserstrahl 3' mit einem Versatz 27' auf der Phasenmaske 5' auf. Der Auftreffpunkt des Laserstrahls 3' (besser gesagt der Ort des Schwerpunkts des Strahlquerschnitts in der Ebene der Phasenmaske 5') auf der Phasenmaske 5' weist daher den lateralen Versatz 27' in Bezug auf den Mittelpunkt 29' der Phasenmaske 5' auf.

Fig. 9b zeigt einen optischen Aufbau 1", der ähnlich zu dem in Fig. 9a gezeigten optischen Aufbau 1' ist. Daher sind gleiche Merkmale auch mit gleichen, jedoch zweifach gestrichenen, Bezugszeichen versehen.

Allerdings weist das optische System 19" keine Auslenkungsoptik 23" auf bzw. diese ist (wie in Fig. 9b) ohne Wirkung, so dass der Strahl 3" nicht abgelenkt wird. Allerdings ist die Phasenmaske 5" senkrecht zur Strahlrichtung verschoben, so dass dadurch der Laserstrahl 3" mit einem Versatz 27" auf der Phasenmaske 5" auftrifft.

Fig. 9c zeigt einen optischen Aufbau 1‴, der ähnlich zu dem in Fig. 9a gezeigten optischen Aufbau 1' und zu dem in Fig. 9b gezeigten optischen Aufbau 1" ist. Daher sind gleiche Merkmale auch mit gleichen, jedoch dreifach gestrichenen, Bezugszeichen versehen.

Das optische System 19‴ weist eine Auslenkungsoptik 23‴ auf, die einen Versatz 27‴ des Laserstrahls 3‴ erzeugt, wie gut durch einen Vergleich des Verlaufs der Mittelachse 25‴ des Laserstrahls 3‴ vor und nach der Auslenkungsoptik 23‴ erkennbar ist.

Dadurch trifft der Laserstrahl 3‴ mit einem Versatz 27‴ auf die Phasenmaske 5‴ auf. Dabei ist allerdings der Mittelpunkt 29‴ der Phasenmaske 5‴ (wie bei dem optischen Aufbau 1' in Fig. 9a) auf der optischen Achse 21‴.

In Fig. 9d ist eine Realisierungsform der Auslenkungsoptik 23‴ dargestellt. Die Auslenkungsoptik 23‴ kann eine gedrehte Platte 31‴ aufweisen. Diese erzeugt den Versatz 27‴.

Phasenfunktionen

Verschiedene exemplarische Phasenfunktionen, welche ein Laserstrahl aufgeprägt bekommen kann und welche als Phasenmaske für das erfindungsgemäße Verfahren eingesetzt werden können, sind in der nachfolgenden Tabelle dargestellt:

| Beschleunigungsprofil | Phase |
|---|---|
| Parabalisch: $c(z) = az^2$ | $\phi(y) = -4/3\ a^{1/2}\ k\ y^{3/2}$ |
| Quartär: $c(z) = az^4$ | $\phi(y) = -16/21\ (3a)^{1/4}\ k\ y^{7/4}$ |
| Logarithmisch: $c(z) = a\ \ln(bz)$ | $\phi(y) = e^{-1}a^2b\ k\ (1-\exp[-y/a])$ |
| Polynomisch: $c(z) = az^n$ (für gerades n) | $\phi(y) = kn^2 y^2 \dfrac{[a(1-n)/y]^{1/n}}{(2n-1)(1-n)}$ |

Die Parameter sind in der Veröffentlichung Froehly, L., Courvoisier, F., Mathis, A., Jacquot, M., Furfaro, L., Giust, R., & Dudley, J. M. (2011). Arbitrary accelerating micron-scale caustic beams in two and three dimensions. Optics express, 19(17), 16455-16465 beschrieben.

Bezugszeichenliste

| | |
|---|---|
| 1, 1', 1", 1‴ | Optischer Aufbau |
| 3, 3', 3", 3‴ | Laserstrahl |
| 5, 5', 5", 5‴ | Phasenmaske |
| 7, 7', 7", 7‴ | Fokussieroptik |
| 9, 9', 9", 9‴ | Substrat |
| 11 | Substrat |
| 13 | Substratbereich |
| 15 | Energieverteilung |
| 17, 17', 17", 17‴ | Linienfokus-Trajektorie |
| 19', 19", 19‴ | Optisches System |
| 21', 21", 21‴ | Optische Achse |
| 23', 23", 23‴ | Auslenkungsoptik |
| 25', 25", 25‴ | Mittelachse des Laserstrahls |
| 27', 27", 27‴ | Versatz |
| 29', 29", 29‴ | Mittelpunkt der Phasenmaske |
| 31‴ | Platte |
| D, D', D", D‴ | Abstand |
| f, f', f", f‴ | Fokuslänge |
| R | Richtung |
| $\omega_0$ | Strahldurchmesser |
| $\Delta z$ | Tiefenbereich |

**Patentansprüche**

1. Verfahren zum Kontrollieren einer mittels zumindest eines Linienfokus zumindest eines Laserstrahls (3, 3', 3", 3‴) innerhalb eines Substrats (9, 9', 9", 9‴, 11) eingebrachten Energieverteilung (15), wobei das Verfahren aufweist:

    Ausbilden des Linienfokus zumindest bereichsweise innerhalb des Substrats (9, 9', 9", 9‴, 11) und Kontrollieren der Energieverteilung (15) innerhalb des Substrats (9, 9', 9", 9‴, 11) zumindest teilweise durch Beeinflussen des Laserstrahls (3, 3', 3", 3‴) mittels wenigstens zumindest einer Phasenmaske (5, 5', 5", 5‴),
**dadurch gekennzeichnet, dass** eine Deposition der Laserpulsenergie an einer vom Scheitelpunkt verschobenen Position entlang der Fokus-Trajektorie (17, 17', 17", 17‴) durch die Beeinflussung mit der Phasenmaske (5, 5', 5", 5‴) kompensiert wird und/oder dass das Kontrollieren der Energieverteilung (15) innerhalb des Substrats (9, 9', 9", 9‴, 11) das Verschieben der Position der maximalen Materialschädigung entlang der Trajektorie (17, 17', 17", 17‴) des Linienfokus und/oder das Verschieben der Position der Energieverteilung (15) entlang der Trajektorie (17, 17', 17", 17‴) des Linienfokus aufweist, so dass eine symmetrische Ausprägung der Materialmodifikation erreicht wird.

2. Verfahren nach Anspruch 1,
wobei die zumindest eine Phasenmaske (5, 5', 5", 5‴) eine Phasenmaske (5, 5', 5", 5‴) mit kubischer Phasenverteilung oder einer Phasenverteilung höherer, insbesondere ungerader, Ordnung ist und/oder die Phasenmaske (5, 5', 5", 5‴) im Strahlengang des Laserstrahls (3, 3', 3", 3‴) vor dem Substrat (9, 9', 9", 9‴, 11) angeordnet ist, und insbesondere der Laserstrahl (3, 3', 3", 3‴), vorzugsweise der Schwerpunkt des in der Ebene der Phasenmaske (5, 5', 5", 5‴) bestehenden Strahl-Querschnitts, einen Auftreffpunkt auf der Phasenmaske (5, 5', 5", 5‴) hat.

3. Verfahren nach einem der vorangehenden Ansprüche,
wobei das Ausbilden des Linienfokus aufweist, dass die Position des Scheitelpunkts oder Mittelpunkts des, insbesondere gekrümmten, Linienfokus mittig entlang eines Tiefenbereichs ($\Delta z$), vorzugsweise eines Dickenbereichs, des Substrats (9, 9', 9", 9‴, 11) eingestellt wird.

4. Verfahren nach einem der vorangehenden Ansprüche,

wobei das Kontrollieren der Energieverteilung (15) innerhalb des Substrats (9, 9', 9", 9‴, 11) ferner das Einstellen der Pulsenergie, der Pulsdauer, der Anzahl von Pulsen im Burst, der Energieverteilung (15) im Burst und/oder der Laser-Wellenlänge aufweist,
wobei vorzugsweise die Pulsenergie derart eingestellt wird, dass der Linienfokus innerhalb des Substrats (9, 9', 9", 9‴, 11) zumindest einen Abschnitt aufweist, entlang dessen das Substratmaterial aufgrund der im Substrat (9, 9', 9", 9‴, 11) deponierten Energie, insbesondere durch eine Wechselwirkung zwischen der Energie und dem Substratmaterial, modifiziert wird, wobei vorzugsweise der Abschnitt eine Länge von (a) mehr als 0,1 mm, vorzugsweise mehr als 0,3 mm, vorzugsweise mehr als 0,5 mm, vorzugsweise mehr als 0,7 mm, vorzugsweise mehr als 1 mm, vorzugsweise mehr als 3 mm, (b) weniger als 5 mm und/oder (c) zwischen 0,1 mm und 5 mm aufweist.

5. Verfahren nach einem der vorangehenden Ansprüche,

(i) wobei das Substrat (9, 9', 9", 9‴, 11) transparent ist, aus Glas ist und/oder eine erste Deckfläche oder eine erste Deckfläche und eine zweite Deckfläche, die vorzugsweise parallel zur ersten Deckfläche verläuft und/oder ihr gegenüberliegt, aufweist,
und/oder
(ii) wobei das Substrat (9, 9', 9", 9‴, 11) eine, vorzugsweise zwischen der ersten und zweiten Deckfläche gemessene, Dicke aufweist
von zwischen 10 $\mu$m und 10 mm, vorzugsweise von zwischen 10 $\mu$m und 500 $\mu$m, vorzugsweise von zwischen 50 $\mu$m und 200 $\mu$m.

6. Verfahren nach einem der vorangehenden Ansprüche,
wobei (a) die maximale Materialschädigung eine Materialschädigung verursacht durch die nichtlineare Wechselwirkung zwischen Laser und Substratmaterial ist, (b) das Kontrollieren der Energieverteilung (15) innerhalb des Substrats (9, 9', 9", 9‴, 11) das Anpassen der räumlichen Ausdehnung der Energieverteilung (15), vorzugsweise entlang der Trajektorie (17, 17', 17", 17‴) des Laserstrahls (3, 3', 3", 3‴), insbesondere der des Linienfokus, aufweist, (c) das Verschieben der Position der Energieverteilung (15), das Verschieben der Position eines, vorzugsweise globalen, Maximums der Energieverteilung (15) und/oder des Schwerpunktes der Energieverteilung (15) aufweist, und/oder (d)

(i) nach dem Anpassen der Position der Energieverteilung (15), am Scheitelpunkt des, insbesondere gekrümmten, Linienfokus zumindest ein Maximum der Energieverteilung (15) positioniert ist,
(ii) nach dem Anpassen der räumlichen Ausdehnung und/oder der Position der Energieverteilung (15) eine entlang der gesamten Substratdicke verlaufende Modifizierung des Substratmaterials durchgeführt wird oder erfolgt,
und/oder

(iii) das Anpassen der Position der Energieverteilung (15) zumindest teilweise ein Aufeinander-Abstimmen des Beeinflussens des Laserstrahls (3, 3', 3'', 3''') mittels der Phasenmaske (5, 5', 5'', 5''') und des Einstellens der Pulsenergie aufweist.

7. Verfahren nach einem der vorangehenden Ansprüche,

wobei das Beeinflussen des Laserstrahls (3, 3', 3'', 3''') mittels wenigstens der zumindest einen Phasenmaske (5, 5', 5'', 5''') aufweist, dass der Laserstrahl (3, 3', 3'', 3''') versetzt zum Zentralpunkt der Phasenmaske (5, 5', 5'', 5''') auftrifft, wobei der Zentralpunkt derjenige Ort der Phasenmaske (5, 5', 5'', 5''') ist, an dem ein auf die Phasenmaske (5, 5', 5'', 5''') auftreffender Laserstrahl (3, 3', 3'', 3''') mit einem gegen Null gehenden Durchmesser von dem Sattelpunkt der auf der Phasenmaske (5, 5', 5'', 5''') aufgeprägten Phasenverteilung beeinflusst wird, und wobei vorzugsweise der Versatz (27', 27'', 27''') innerhalb der Spiegelebene der Phasenverteilung erfolgt, wobei vorzugsweise der Versatz (27', 27'', 27''') zwischen 0,1 μm und 5000 μm, vorzugsweise zwischen 1 μm und 3000 μm, vorzugsweise zwischen 1 μm und 2000 μm, beträgt.

8. Verfahren nach Anspruch 7,
wobei

(i) der Versatz (27', 27'', 27''') eingestellt wird

(a) durch ein Bewegen der Phasenmaske (5, 5', 5'', 5''') relativ zu dem Laserstrahl (3, 3', 3'', 3''');
(b) durch zumindest eine gedrehte planparallele Platte (31'''), insbesondere aus einem Glasmaterial und/oder einem optischen, vorzugsweise bei der Laserwellenlänge transparenten Material;
(c) durch wenigstens zwei, im Strahlengang hintereinander angeordneten Prismen, wobei die Prismen vorzugsweise gleiche Prismenwinkel aufweisen und vorzugsweise das zweite Prisma um 180° um die optische Achse (21', 21'', 21''') rotiert gegenüber dem ersten Prisma angeordnet ist;
und/oder
(d) durch ein Translatieren, insbesondere innerhalb des Strahlengangs und/oder parallel zur Richtung des einfallenden Strahles, eines den Laserstrahl (3, 3', 3'', 3''') umlenkenden Umlenkspiegels.
und/oder

(ii) der Versatz (27', 27'', 27''') eingestellt wird durch Ablenkung des, vorzugsweise parallel zur und/oder entlang der Mittelachse der Phasenmaske (5, 5', 5'', 5''') verlaufenden, Laserstrahls (3, 3', 3'', 3''') mittels wenigstens eines ersten Mittels, so dass der Richtungsvektor des auf die Phasenmaske (5, 5', 5'', 5''') auftreffenden Strahls (3, 3', 3'', 3''') einen Winkel mit dem Richtungsvektor der Mittelachse der Phasenmaske (5, 5', 5'', 5''') einschließt, wobei vorzugsweise der Winkel 1/500 radiant oder kleiner, vorzugsweise 1/1000 radiant oder kleiner, vorzugsweise 1/2000 radiant oder kleiner, ist,

und wobei vorzugsweise die Ablenkung eingestellt wird mittels des ersten Mittels aufweisend

(a) zumindest ein drehbar gelagertes Prisma;
(b) zumindest einen drehbar gelagerten Spiegel;
(c) zumindest einen Polygon- oder Galvoscanner;
(d) zumindest einen akustooptischen Modulator;
(e) zumindest einen liquid crystal on silicon spatial light modulator;
und/oder
(f) zumindest einen Micro-Electronic-Mirror-Baustein;

und wobei vorzugsweise ferner ein zu dem ersten Mittel identisches, zweites Mittel vorgesehen und im Strahlengang vor oder nach der Phasenmaske (5, 5', 5'', 5''') angeordnet wird und/oder synchron mit dem ersten Mittel gesteuert wird, um den Laserstrahl (3, 3', 3'', 3''') derart abzulenken, dass er senkrecht auf die Phasenmaske (5, 5', 5'', 5''') und/oder das Substrat (9, 9', 9'', 9''', 11) einfällt und/oder parallel aber versetzt zu dem Verlauf vor dem Umlenken mit dem ersten Mittel verläuft.

9. Verfahren nach einem der vorangehenden Ansprüche,
wobei das Beeinflussen des Laserstrahls (3, 3', 3'', 3''') mittels wenigstens der zumindest einen Phasenmaske (5, 5', 5", 5‴) zeitabhängig durchgeführt wird und dadurch die Energieverteilung (15), insbesondere deren Gestalt und/oder Position, zeitabhängig verändert wird.

10. Verfahren nach Anspruch 9,
   wobei der Laserstrahl (3, 3', 3", 3‴) zu unterschiedlichen, vorzugsweise unmittelbar aufeinanderfolgenden, Zeiträumen durch unterschiedliche Bereiche der Phasenmaske (5, 5', 5", 5‴) beeinflusst wird, insbesondere der Laserstrahl (3, 3', 3", 3‴), der Schwerpunkt des in der Ebene der Phasenmaske (5, 5', 5", 5‴) bestehenden Strahl-Querschnitts, während den unterschiedlichen Zeiträumen unterschiedliche Auftreffpunkte auf dieser hat.

11. Verfahren nach einem der Ansprüche 9 bis 10,
   wobei durch das zeitabhängige Beeinflussen die Energieverteilung (15), vorzugsweise zumindest ein Maximum der Energieverteilung (15), innerhalb des Substrats (9, 9', 9", 9‴, 11), insbesondere von einer größeren zu einer geringeren Tiefe und/oder entlang der Fokus-Trajektorie (17, 17', 17", 17‴) innerhalb des Substrats (9, 9', 9", 9‴, 11), bewegt wird.

12. Verfahren nach einem der vorangehenden Ansprüche,
   wobei das Beeinflussen des Laserstrahls (3, 3', 3", 3‴) mittels wenigstens der zumindest einen Phasenmaske (5, 5', 5", 5‴) aufweist, dass die Intensitätsverteilung des Laserstrahls (3, 3', 3", 3‴), insbesondere innerhalb einer Pulsdauer, auf der Phasenmaske (5, 5', 5", 5‴), insbesondere am Ort des Auftreffens des Strahls (3, 3', 3", 3‴) auf der Phasenmaske (5, 5', 5", 5‴), verändert, insbesondere räumlich auf dieser verschoben, wird.

13. Verfahren nach einem der vorangehenden Ansprüche,

   wobei mittels der mittels zumindest eines Teils des Linienfokus eingebrachten Energieverteilung (15) (a) das Substrat (9, 9', 9", 9‴, 11) zumindest bereichsweise in einer Materialeigenschaft, wie insbesondere seiner Dichte, sein Brechungsindex, seine Spannungswerte und/oder seiner Ätzrate, modifiziert wird, (b) Mikrorisse zumindest bereichsweise in dem Substratmaterial erzeugt werden und/oder (c) zumindest bereichsweise Material von dem Substrat (9, 9', 9", 9‴, 11) entfernt und/oder verdrängt wird,
   wobei vorzugsweise in mehreren aufeinanderfolgenden Substratbereichen (13) auf diese Weise das Substratmaterial entlang einer geraden oder beliebig geformten Kontur modifiziert, entfernt und/oder verdrängt, insbesondere das Substratmaterial in das umgebene Substratmaterial hineinverdichtet, wird.

14. Verfahren nach einem der vorangehenden Ansprüche,

   wobei zwei oder mehr Linienfoki von zwei oder mehr Laserstrahlen (3, 3', 3", 3‴) innerhalb desselben Bereichs im Substrat (9, 9', 9", 9‴, 11), vorzugsweise zeitlich zumindest teilweise parallel und/oder zumindest teilweise sequentiell, entsprechend ausgebildet und die von ihnen in das Substrat (9, 9', 9", 9‴, 11) eingebrachte Energieverteilung (15) jeweils entsprechend kontrolliert werden,
   wobei vorzugsweise (a) die von den einzelnen Linienfoki eingebrachten Energieverteilung (15), insbesondere hinsichtlich Position und/oder Gestalt, unterschiedlich sind, wobei vorzugsweise die Maxima der einzelnen Energieverteilungen (15) an unterschiedlichen Positionen innerhalb des Substrats (9, 9', 9", 9‴, 11) bestehen, und/oder (b) die Trajektorien (17, 17', 17", 17‴) der zwei oder mehr Linienfoki deckungsgleich sind.

15. Verfahren nach einem der vorangehenden Ansprüche,
   wobei die Orientierung zumindest eines Abschnitts des Linienfokus innerhalb des Substrats (9, 9', 9", 9‴, 11) relativ zur Hauptausbreitungsrichtung des Laserstrahls (3, 3', 3", 3‴) im Substrat durch das Kontrollieren der Energieverteilung (15) innerhalb des Substrats (9, 9', 9", 9‴, 11) und ferner durch Anpassen der Fokuslage im Substratmaterial eingestellt wird, wobei vorzugsweise das Anpassen der Fokuslage durch eine Änderung des Abstandes (D, D', D", D‴) zwischen einer Fokussierungsoptik und Substrat (9, 9', 9", 9‴, 11) erfolgt und/oder die Dicke des Substrats (9, 9', 9", 9‴, 11) kleiner ist als die halbe für einen gegebenen optischen Aufbau potenziell mögliche Länge des Linienfokus entlang der Dickenerstreckung des Substrats (9, 9', 9", 9‴, 11), wobei vorzugsweise die Pulsenergie und/oder der Strahldurchmesser ($\omega_0$) so gewählt sind, dass das Substrat (9, 9', 9", 9‴, 11) in seiner gesamten Tiefe modifiziert wird oder nicht in seiner gesamten Tiefe modifiziert wird.

16. Verfahren nach einem der vorangehenden Ansprüche,
   wobei

      (i) der Linienfokus ein Fokus eines Airy-Strahls ist,

(ii) der Linienfokus eine maximale Auslenkung von einem geraden Verlauf aufweist, die mehr als 20 $\mu$m, mehr als 40 $\mu$m, mehr als 60 $\mu$m, mehr als 80 $\mu$m oder mehr als 100 $\mu$m beträgt,

(iii) der Laserstrahl (3, 3', 3", 3''') von einem gepulsten Laser ausgesendet wird,

(iv) die Wellenlänge des Laserstrahls (3, 3', 3", 3''') ausgewählt ist aus dem Wellenlängenbereich von zwischen 200 nm und 1500 nm, vorzugsweise die Wellenlänge 343 nm, 355 nm, 515 nm, 532 nm, zwischen 750 nm und 850 nm, 1030 nm und/oder 1064 nm beträgt, das Mikroskopobjektiv bzw. die Fourierlinse einer Fokussieroptik (7, 7', 7", 7'''), mit der vorzugsweise der Laserstrahl (3, 3', 3", 3''') auf das Substrat (9, 9', 9", 9''', 11) fokussiert wird, eine Brennweite von 10-20 mm aufweist, der Koeffizient der kubischen Phase (Laser-Parameter Beta) einen Wert von zwischen $0,5\times10^3$/m und $5\times10^3$/m aufweist, der Durchmesser des Rohstrahls (Laser-Parameter $\omega_0$) einen Wert von zwischen 1 mm und 10 mm, vorzugsweise von zwischen 2,5 mm und 5 mm, aufweist, die Pulsdauer (Laser-Parameter $\tau$) einen Wert von 0,1-10 ps aufweist, die Pulsenergie (Laser-Parameter $E_p$) einen Wert von zwischen 1 und 1.500 $\mu$J, vorzugsweise von zwischen 30 und 500 $\mu$J, insbesondere 474 $\mu$J, aufweist, und/oder die Anzahl der Pulse im Burst (Laser-Parameter N) einen Wert von zwischen 1 und 200, vorzugsweise von zwischen 1 und 100, insbesondere von zwischen 1 und 8, aufweist,

und/oder

(v) die Pulsenergie des Lasers nur dazu ausreicht, entlang eines bestimmten Abschnitts des Linienfokus das Substrat (9, 9', 9", 9''', 11) in wenigstens einer Materialeigenschaft zu modifizieren oder Material von dem Substrat (9, 9', 9", 9''', 11) zu entfernen oder zu verdrängen, wobei der Abschnitt kürzer ist als die Ausdehnung des Substratbereichs (13), der in seiner Materialeigenschaft modifiziert oder der entfernt oder verdrängt werden soll.

**17.** Verfahren nach einem der vorangehenden Ansprüche,

wobei die innerhalb des Substrats (9, 9', 9", 9''', 11) modifizierten Bereiche durch Erzeugen einer mechanischen und/oder thermischen Spannung und/oder durch ein Ätzverfahren geöffnet werden, insbesondere um ein Durchgangsloch und/oder ein Sackloch innerhalb des Substratmaterials zu erzeugen, und/oder

wobei entlang einer geschlossenen Kontur und/oder entlang einer von Substratseite zu Substratseite verlaufenden Modifikation durch mechanische, thermische und/doer chemische Prozesse geöffnet werden, insbesondere um eine Innen- oder Außenkontur mit geformter Seitenfläche zu erzeugen.

## Claims

**1.** Method for controlling an energy distribution (15) introduced into a substrate (9, 9', 9", 9''', **11)** by means of at least one line focus of at least one laser beam (3, 3', 3", 3'''), wherein the method comprises:

forming the line focus at least in areas within the substrate (9, 9', 9", 9''', **11)** and controlling the energy distribution (15) within the substrate (9, 9', 9", 9''', **11)** at least in part by influencing the laser beam (3, 3', 3", 3''') by means of at least one phase mask (5, 5', 5", 5'''),

**characterized in that**

a deposition of the laser pulse energy at a position displaced from the apex along the focus trajectory (17, 17', 17", 17''') is compensated by influencing with the phase mask (5, 5', 5", 5'''); and/or

controlling of the energy distribution (15) within the substrate (9, 9', 9", 9''', 11) involves shifting the position of the maximum material damage along the trajectory (17, 17', 17", 17''') of the line focus and/or shifting the position of the energy distribution (15) along the trajectory (17, 17', 17", 17''') of the line focus, so that a symmetrical characteristic of the material modification is achieved.

**2.** Method according to claim 1,

wherein the at least one phase mask (5, 5', 5", 5''') is a phase mask (5, 5', 5", 5''') having a cubic phase distribution or a phase distribution of higher, in particular odd, order and/or the phase mask (5, 5', 5", 5''') is arranged in the beam path of the laser beam (3, 3', 3", 3''') upstream of the substrate (9, 9', 9", 9''', 11), and in particular the laser beam (3, 3', 3", 3'''), preferably the center of gravity of the beam cross-section existing in the plane of the phase mask (5, 5', 5", 5'''), has a point of impact on the phase mask (5, 5', 5", 5''').

**3.** Method according to any one of the preceding claims,

wherein forming the line focus includes that the position of the apex or center of the, in particular curved, line focus is set centrally along a depth range ($\Delta$z), preferably a thickness range, of the substrate (9, 9', 9", 9''', 11).

4. Method according to any one of the preceding claims,

wherein controlling the energy distribution (15) within the substrate (9, 9', 9", 9"', 11) further comprises adjusting the pulse energy, the pulse duration, the number of pulses in the burst, the energy distribution (15) in the burst, and/or the laser wavelength,
wherein the pulse energy is preferably adjusted such that the line focus within the substrate (9, 9', 9", 9"', 11) has at least one section along which the substrate material is modified due to the energy deposited in the substrate (9, 9', 9", 9"', 11), in particular due to an interaction between the energy and the substrate material, wherein the section preferably has a length of (a) more than 0.1 mm, preferably more than 0.3 mm, preferably more than 0.5 mm, preferably more than 0.7 mm, preferably more than 1 mm, preferably more than 3 mm, (b) less than 5 mm and/or (c) between 0.1 mm and 5 mm.

5. Method according to any one of the preceding claims,

(i) wherein the substrate (9, 9', 9", 9"', 11) is transparent, is made of glass, and/or has a first cover surface or a first cover surface and a second cover surface, which preferably extends parallel to the first cover surface and/or is opposite thereto, and/or
(ii) wherein the substrate (9, 9', 9", 9"', 11) has a thickness, preferably measured between the first and the second cover surfaces, of between 10 $\mu$m and 10 mm, preferably between 10 $\mu$m and 500 $\mu$m, preferably between 50 $\mu$m and 200 $\mu$m.

6. Method according to any one of the preceding claims,
wherein (a) the maximum material damage is a material damage caused by the nonlinear interaction between the laser and the substrate material, (b) controlling the energy distribution (15) within the substrate (9, 9', 9", 9"', 11) comprises adjusting the spatial extent of the energy distribution (15), preferably along the trajectory (17, 17', 17", 17"') of the laser beam (3, 3', 3", 3"'), in particular that of the line focus, (c) shifting the position of the energy distribution (15) comprises shifting the position of a preferably global maximum of the energy distribution (15) and/or of the center of gravity of the energy distribution (15), and/or wherein (d)

(i) after adjusting the position of the energy distribution (15) at least one maximum of the energy distribution (15) is disposed at the apex of the in particular curved line focus,
(ii) after adjusting the spatial extent and/or the position of the energy distribution (15), a modification of the substrate material is carried out or takes place along the entire substrate thickness, and/or
(iii) adjusting the position of the energy distribution (15) comprises at least partially coordinating the influence of the laser beam (3, 3', 3", 3"') by means of the phase mask (5, 5', 5", 5"') and the adjustment of the pulse energy.

7. Method according to any one of the preceding claims,

wherein the influencing of the laser beam (3, 3', 3", 3"') ) by means of at least one of the at least one phase mask (5, 5', 5", 5"') includes that the laser beam (3, 3', 3", 3"') strikes the phase mask (5, 5', 5", 5"') offset from its center point, wherein the center point is the position of the phase mask (5, 5', 5", 5"') at which a laser beam (3, 3', 3", 3"'), which hits on the phase mask (5, 5', 5", 5"') and which has a diameter approaching zero, is influenced by the saddle point of the phase distribution induced on the phase mask (5, 5', 5", 5"'), and wherein preferably the offset (27', 27", 27"') occurs within the mirror plane of the phase distribution,
wherein preferably the offset (27', 27", 27"') is between 0.1 $\mu$m and 5000 $\mu$m, preferably between 1 $\mu$m and 3000 $\mu$m, preferably between 1 $\mu$m and 2000 $\mu$m.

8. Method according to claim 7, wherein

(i) the offset (27', 27", 27"') is set

(a) by moving the phase mask (5, 5', 5", 5"') relative to the laser beam (3, 3', 3", 3"');
(b) by at least one rotated plane-parallel plate (31"'), in particular made of a glass material and/or an optical material, which is preferably transparent at the laser wavelength;
(c) by at least two prisms arranged one behind the other in the beam path, wherein the prisms preferably have equal prism angles and preferably the second prism is arranged rotated by 180° about the optical axis (21', 21", 21"') relative to the first prism; and/or
(d) by translating, in particular within the beam path and/or parallel to the direction of the incident beam, a deflection mirror (3, 3', 3", 3''') that deflects the laser beam (2, 3', 3", 3'''); and/or

(ii) the offset (27', 27", 27") is adjusted by deflecting the laser beam (3, 3', 3", 3"), which extends preferably parallel to and/or along the center axis of the phase mask (5, 5', 5", 5'''), by use of at least a first means, so that the direction vector of the beam (3, 3', 3", 3''') which impinges on the phase mask (5, 5', 5", 5''') encloses an angle with the direction vector of the central axis of the phase mask (5, 5', 5", 5'''), wherein the angle is preferably 1/500 radiant or smaller, preferably 1/1000 radiant or smaller, preferably 1/2000 radiant or smaller, and

wherein the deflection is preferably adjusted by means of the first means comprising:

(a) at least one rotatably mounted prism;
(b) at least one rotatably mounted mirror;
(c) at least one polygon or galvo scanner;
(d) at least one acousto-optical modulator;
(e) at least one liquid crystal on silicon spatial light modulator; and/or
(f) at least one micro-electronic mirror device; and

wherein, preferably, further a second means identical to the first means is provided and arranged in the beam path upstream or downstream the phase mask (5, 5', 5", 5''') and/or is controlled synchronously with the first means in order to deflect the laser beam (3, 3', 3", 3''') in such a way that it strikes the phase mask (5, 5', 5", 5''') and/or the substrate (9, 9', 9", 9''', 11) perpendicularly and/or extends parallel but offset to the course before deflection by the first means.

9.  Method according to any one of the preceding claims,
    wherein the influencing of the laser beam (3, 3', 3", 3''') by means of at least the at least one phase mask (5, 5', 5", 5''') is carried out in a time-dependent manner, thereby changing the energy distribution (15), in particular its shape and/or position, in a time-dependent manner.

10. Method according to claim 9,
    wherein the laser beam (3, 3', 3", 3''') is influenced at different, preferably immediately successive, time periods by different areas of the phase mask (5, 5', 5", 5'''), in particular the laser beam (3, 3', 3", 3'''), the center of gravity of the beam cross-section existing in the plane of the phase mask (5, 5', 5", 5'''), has different points of impact on it during the different time periods.

11. Method according to any one of claims 9 to 10,
    wherein the time-dependent influencing causes the energy distribution (15), preferably at least a maximum of the energy distribution (15), to move within the substrate (9, 9', 9", 9''', 11), in particular from a greater to a lesser depth and/or along the focus trajectory (17, 17', 17", 17''') within the substrate (9, 9', 9", 9''', 11).

12. Method according to any one of the preceding claims,
    wherein the influencing of the laser beam (3, 3', 3", 3''') by means of at least the at least one phase mask (5, 5', 5", 5''') comprises that the intensity distribution of the laser beam (3, 3', 3", 3'''), in particular within a pulse duration, on the phase mask (5, 5', 5", 5'''), in particular at the point of impact of the beam (3, 3', 3", 3''') on the phase mask (5, 5', 5", 5'''), is modified, in particular spatially shifted on it.

13. Method according to any one of the preceding claims,

    wherein, by use of the energy distribution (15) introduced by at least part of the line focus (a) the substrate (9, 9', 9", 9''', 11) is modified at least in some areas in a material property, such as in particular its density, its refractive index, its stress values and/or its etching rate, (b) microcracks are generated at least in some areas in the substrate material and/or (c) at least in some areas material is removed and/or displaced from the substrate (9, 9', 9", 9''', 11), wherein, preferably in several successive substrate areas (13) in this manner the substrate material is modified, removed and/or displaced along a straight or arbitrarily shaped contour, in particular the substrate material is compacted into the surrounding substrate material.

14. Method according to any one of the preceding claims,

    wherein two or more line foci of two or more laser beams (3, 3', 3", 3''') are formed within the same area in the substrate (9, 9', 9", 9''', 11), preferably at least partially parallel and/or at least partially sequentially in time, and the energy distribution (15) introduced by them into the substrate (9, 9', 9", 9"', 11) are respectively controlled accordingly,
wherein preferably (a) the energy distribution (15) introduced by the individual line foci are different, in particular with regard to position and/or shape, wherein preferably the maxima of the individual energy distributions (15) are at different positions within the substrate (9, 9', 9", 9"', 11), and/or (b) the trajectories (17, 17', 17", 17"') of the two or more line foci are congruent.

15. Method according to any one of the preceding claims,
wherein the orientation of at least one section of the line focus within the substrate (9, 9', 9", 9"', 11) relative to the main direction of propagation of the laser beam (3, 3', 3", 3"') within the substrate is adjusted by controlling the energy distribution (15) within the substrate (9, 9', 9", 9"', 11) and further by adjusting the focus position in the substrate material, wherein preferably the adjustment of the focus position is effected by changing the distance (D, D', D", D"') between a focusing optic and the substrate (9, 9', 9", 9"', 11) and/or the thickness of the substrate (9, 9', 9", 9"', 11) is less than half the length of the line focus along the thickness of the substrate (9, 9', 9", 9"', 11) potentially possible for a given optical setup, wherein preferably the pulse energy and/or the beam diameter ($\omega_0$) are selected such that the substrate (9, 9', 9", 9"', 11) is modified throughout its entire depth or is not modified throughout its entire depth.

16. Method according to any one of the preceding claims, wherein

(i) the line focus is a focus of an Airy beam,
(ii) the line focus has a maximum deflection from a straight course of more than 20 $\mu$m, more than 40 $\mu$m, more than 60 $\mu$m, more than 80 $\mu$m, or more than 100 $\mu$m,
(iii) the laser beam (3, 3', 3", 3"') is emitted by a pulsed laser,
(iv) the wavelength of the laser beam (3, 3', 3", 3"') is selected from the wavelength range between 200 nm and 1500 nm, preferably the wavelength is 343 nm, 355 nm, 515 nm, 532 nm, between 750 nm and 850 nm, 1030 nm and/or 1064 nm, the microscope objective or the Fourier lens of a focusing optic (7, 7', 7", 7"') by means of which the laser beam (3, 3', 3", 3"') is preferably focused onto the substrate (9, 9', 9", 9"', 11), has a focal length of 10 - 20 mm, the coefficient of the cubic phase (laser parameter beta) has a value of between $0.5 \times 10^3$/m and $5 \times 10^3$/m, the diameter of the raw beam (laser parameter $\omega_0$) has a value of between 1 mm and 10 mm, preferably between 2.5 mm and 5 mm, the pulse duration (laser parameter $\tau$) has a value of 0.1 - 10 ps, the pulse energy (laser parameter $E_p$) has a value of between 1 and 1,500 $\mu$J, preferably between 30 and 500 $\mu$J, in particular 474 $\mu$J, and/or the number of pulses in the burst (laser parameter N) has a value of between 1 and 200, preferably of between 1 and 100, in particular of between 1 and 8, and/or
(v) the pulse energy of the laser is only sufficient to modify the substrate (9, 9', 9", 9"', 11) in at least one material property or to remove or displace material from the substrate (9, 9', 9", 9"', 11) along a specific section of the line focus, wherein the section is shorter than the extension of the substrate area (13) whose material property is to be modified or which is to be removed or displaced.

17. Method according to any one of the preceding claims,

wherein the modified areas within the substrate (9, 9', 9", 9"', 11) are opened by generating mechanical and/or thermal stress and/or by an etching process, in particular to create a through hole and/or a blind hole within the substrate material, and/or
wherein modified areas along a closed contour and/or along a contour extending from one side of the substrate to the other side of the substrate are opened by mechanical, thermal, and/or chemical processes, in particular to create an inner or outer contour with a shaped side surface.

## Revendications

1. Procédé pour contrôler une distribution d'énergie (15) introduite à l'intérieur d'un substrat (9, 9', 9", 9"', **11**) au moyen d'au moins un foyer linéaire d'au moins un faisceau laser (3, 3', 3", 3"'), le procédé comprenant :

la formation du foyer linéaire au moins partiellement à l'intérieur du substrat (9, 9', 9", 9"', 11) et le contrôle de la distribution d'énergie (15) à l'intérieur du substrat (9, 9', 9", 9"', 11) au moins en partie en influençant le faisceau laser (3, 3', 3", 3"') au moyen d'au moins un masque de phase (5, 5', 5", 5""),
**caractérisé en ce qu'**un dépôt de l'énergie d'impulsion laser à une position décalée par rapport au sommet le long de la trajectoire de focalisation (17, 17', 17", 17"') est compensé par l'influence du masque de phase (5, 5', 5", 5‴) et/ou **en ce que** le contrôle de la distribution d'énergie (15) à l'intérieur du substrat (9, 9', 9", 9‴, 11) comprend le déplacement de la position de l'endommagement maximal du matériau le long de la trajectoire (17, 17', 17", 17‴) du foyer linéaire et/ou le déplacement de la position de la distribution d'énergie (15) le long de la trajectoire (17, 17', 17", 17‴) du foyer linéaire, de manière à obtenir une modification symétrique du matériau.

2. Procédé selon la revendication 1,
dans lequel le au moins un masque de phase (5, 5', 5", 5‴) est un masque de phase (5, 5', 5", 5‴) avec une distribution de phase cubique ou une distribution de phase d'ordre supérieur, en particulier impair, et/ou le masque de phase (5, 5', 5", 5‴) est disposé dans le trajet du faisceau laser (3, 3', 3", 3‴) devant le substrat (9, 9', 9", 9‴, 11), et en particulier le faisceau laser (3, 3', 3", 3‴), de préférence le centre de gravité de la section transversale du faisceau existant dans le plan du masque de phase (5, 5', 5", 5‴), possède un point d'incidence sur le masque de phase (5, 5', 5", 5‴).

3. Procédé selon l'une quelconque des revendications précédentes,
dans lequel la formation du foyer linéaire comprend le réglage de la position du sommet ou du centre du foyer linéaire, en particulier courbé, au milieu d'une plage de profondeur ($\Delta z$), de préférence d'une plage d'épaisseur, du substrat (9, 9', 9", 9‴, 11).

4. Procédé selon l'une quelconque des revendications précédentes,

dans lequel le contrôle de la distribution d'énergie (15) à l'intérieur du substrat (9, 9', 9", 9‴, 11) comprend en outre le réglage de l'énergie d'impulsion, de la durée d'impulsion, du nombre d'impulsions dans un train d'impulsions, de la distribution d'énergie (15) dans un train d'impulsions et/ou de la longueur d'onde laser,
dans lequel l'énergie d'impulsion est de préférence réglée de telle sorte que le foyer linéaire à l'intérieur du substrat (9, 9', 9", 9‴, 11) présente au moins une section le long de laquelle le matériau du substrat est modifié en raison de l'énergie déposée dans le substrat (9, 9', 9", 9‴, 11), en particulier par une interaction entre l'énergie et le matériau du substrat, la section présentant de préférence une longueur (a) supérieure à 0,1 mm, de préférence supérieure à 0,3 mm, de préférence supérieure à 0,5 mm, de préférence supérieure à 0,7 mm, de préférence supérieure à 1 mm, de préférence supérieure à 3 mm, (b) inférieure à 5 mm et/ou (c) comprise entre 0,1 mm et 5 mm.

5. Procédé selon l'une quelconque des revendications précédentes, dans lequel le substrat (9, 9', 9", 9‴, 11) est transparent, est en verre et/ou présente une première surface de recouvrement ou une première surface de recouvrement et une deuxième surface de recouvrement qui s'étend de préférence parallèlement à la première surface de recouvrement et/ou lui fait face,
et/ou
(i) le substrat (9, 9', 9", 9‴, 11) a une épaisseur, de préférence mesurée entre la première et la deuxième surface de recouvrement, comprise entre 10 $\mu$m et 10 mm, de préférence comprise entre 10 $\mu$m et 500 $\mu$m, de préférence comprise entre 50 $\mu$m et 200 $\mu$m.

6. Procédé selon l'une quelconque des revendications précédentes,
dans lequel (a) l'endommagement maximal du matériau est un endommagement du matériau causé par l'interaction non linéaire entre le laser et le matériau du substrat, (b) le contrôle de la distribution d'énergie (15) à l'intérieur du substrat (9, 9', 9", 9‴, 11) comprend l'adaptation de l'extension spatiale de la distribution d'énergie (15), de préférence le long de la trajectoire (17, 17', 17", 17‴) du faisceau laser (3, 3', 3", 3‴), en particulier celle du foyer linéaire, (c) le déplacement de la position de la distribution d'énergie (15) comprend le déplacement de la position d'un maximum, de préférence global, de la distribution d'énergie (15) et/ou du centre de gravité de la distribution d'énergie (15), et/ou (d)

(i) après l'ajustement de la position de la distribution d'énergie (15), au moins un maximum de la distribution d'énergie (15) est positionné au sommet du foyer linéaire, en particulier courbé,
(ii) après l'ajustement de l'étendue spatiale et/ou de la position de la distribution d'énergie (15), une modification du matériau du substrat s'étendant sur toute l'épaisseur du substrat est effectuée ou a lieu,
et/ou
(iii) l'ajustement de la position de la distribution d'énergie (15) comprend au moins en partie une coordination de l'influence du faisceau laser (3, 3', 3", 3‴) au moyen du masque de phase (5, 5', 5", 5‴) et le réglage de l'énergie d'impulsion.

7. Procédé selon l'une quelconque des revendications précédentes, dans lequel l'influence exercée sur le faisceau laser (3, 3', 3", 3''') au moyen d'au moins un masque de phase (5, 5', 5", 5''') comprend que le faisceau laser (3, 3', 3", 3''') frappe de manière décalée par rapport au point central du masque de phase (5, 5', 5", 5'''), le point central étant l'emplacement du masque de phase (5, 5', 5", 5''') où un faisceau laser (3, 3', 3", 3''') frappant le masque de phase (5, 5', 5", 5''') avec un diamètre tendant vers zéro est influencé par le point d'inflexion de phase imprimée sur le masque de phase (5, 5', 5", 5'''), et le décalage (27', 27", 27''') s'effectue de préférence à l'intérieur du plan du miroir de la distribution de phase,

dans lequel le décalage (27', 27", 27''') est de préférence compris entre 0,1 μm et 5000 μm, de préférence entre 1 μm et 3000 μm, de préférence entre 1 μm et 2000 μm.

8.  Procédé selon la revendication 7, dans lequel

    (i) le décalage (27', 27", 27''') est réglé

    (a) en déplaçant le masque de phase (5, 5', 5", 5''') par rapport au faisceau laser (3, 3', 3", 3''') ;
    (b) par au moins une plaque plane parallèle tournée (31), en particulier en verre et/ou en un matériau optique, de préférence transparent à la longueur d'onde du laser ;
    (c) par au moins deux prismes disposés l'un derrière l'autre dans le trajet du faisceau, les prismes présentant de préférence des angles prismatiques identiques et le deuxième prisme étant de préférence disposé tourné à 180° autour de l'axe optique (21', 21", 21''') par rapport au premier prisme ; et/ou
    (d) par une translation, en particulier à l'intérieur du trajet du faisceau et/ou parallèlement à la direction du faisceau incident, d'un miroir de déviation déviant le faisceau laser (3, 3', 3", 3'''), et/ou

    (ii) le décalage (27', 27", 27''') est réglé par déviation du faisceau laser (3, 3', 3", 3''') s'étendant de préférence parallèlement et/ou le long de l'axe médian du masque de phase (5, 5', 5", 5''') au moyen d'au moins un premier moyen, de sorte que le vecteur de direction du faisceau (3, 3', 3", 3''') incident sur le masque de phase (5, 5', 5", 5''') forme un angle avec le vecteur de direction de l'axe central du masque de phase (5, 5', 5", 5'''), l'angle étant de préférence de 1/500 radian ou moins, de préférence de 1/1000 radian ou moins, de préférence de 1/2000 radian ou moins, et la déviation étant de préférence réglée au moyen du premier moyen comprenant

    (a) au moins un prisme monté de manière rotative ;
    (b) au moins un miroir monté de manière rotative ;
    (c) au moins un scanner polygonal ou galvométrique ;
    (d) au moins un modulateur acousto-optique ;
    (e) au moins un modulateur spatial de lumière à cristaux liquides sur silicium ; et/ou
    (f) au moins un composant à miroir microélectronique ;

    et dans lequel il est en outre prévu de préférence un deuxième moyen identique au premier moyen, qui est disposé dans le trajet du faisceau avant ou après le masque de phase (5, 5', 5", 5''') et/ou est commandé de manière synchrone avec le premier moyen afin de dévier le faisceau laser (3, 3', 3", 3''') de telle sorte qu'il tombe perpendiculairement sur le masque de phase (5, 5', 5", 5''') et/ou le substrat (9, 9', 9", 9''', 11) et/ou qu'il soit parallèle mais décalé par rapport à la trajectoire avant la déviation avec le premier moyen.

9.  Procédé selon l'une quelconque des revendications précédentes, dans lequel l'influence sur le faisceau laser (3, 3', 3", 3''') est exercée en fonction du temps au moyen d'au moins un masque de phase (5, 5', 5", 5''') et la distribution d'énergie (15), en particulier sa forme et/ou sa position, est modifiée en fonction du temps.

10. Procédé selon la revendication 9, dans lequel le faisceau laser (3, 3', 3", 3''') est influencé à différents moments, de préférence immédiatement successifs, par différentes zones du masque de phase (5, 5', 5", 5'''), en particulier le faisceau laser (3, 3', 3", 3'''), le centre de gravité de la section transversale du faisceau existant dans le plan du masque de phase (5, 5', 5", 5''') ayant différents points d'impact sur celui-ci pendant les différentes périodes.

11. Procédé selon l'une quelconque des revendications 9 à 10, dans lequel l'influence en fonction du temps modifie la distribution d'énergie (15), de préférence au moins un maximum de la distribution d'énergie (15), à l'intérieur du substrat (9, 9', 9", 9''', 11), en particulier d'une profondeur plus grande à une profondeur plus faible et/ou le long de la trajectoire de foyer (17, 17', 17", 17") à l'intérieur du substrat (9, 9', 9", 9‴, 11).

12. Procédé selon l'une quelconque des revendications précédentes,
dans lequel l'influence exercée sur le faisceau laser (3, 3', 3", 3‴) au moyen d'au moins un masque de phase (5, 5', 5", 5‴) comprend que la distribution d'intensité du faisceau laser (3, 3', 3", 3‴), en particulier pendant une durée d'impulsion, est modifiée sur le masque de phase (5, 5', 5", 5‴), en particulier au lieu d'incidence du faisceau (3, 3', 3", 3"") sur le masque de phase (5, 5', 5", 5‴), en particulier déplacée spatialement sur celui-ci.

13. Procédé selon l'une des revendications précédentes,
dans lequel, au moyen de la distribution d'énergie (15) introduite au moyen d'au moins une partie du foyer linéaire, (a) le substrat (9, 9', 9", 9‴, 11) est modifié au moins par endroits dans une propriété du matériau, comme en particulier sa densité, son indice de réfraction, ses valeurs de tension et/ou sa vitesse de gravure, (b) des microfissures sont générées au moins par endroits dans le matériau du substrat et/ou (c) au moins par endroits, du matériau est retiré et/ou déplacé du substrat (9, 9', 9", 9‴, 11), dans lequel le matériau du substrat est de préférence modifié, retiré et/ou déplacé de cette manière le long d'un contour droit ou de forme quelconque dans plusieurs zones successives (13) du substrat, le matériau du substrat étant en particulier compacté dans le matériau du substrat environnant.

14. Procédé selon l'une quelconque des revendications précédentes, dans lequel deux ou plusieurs foyers linéaires de deux ou plusieurs faisceaux laser (3, 3', 3", 3‴) sont formés à l'intérieur de la même zone du substrat (9, 9', 9", 9‴, 11), de préférence au moins partiellement de manière parallèle dans le temps et/ou au moins partiellement de manière séquentielle, et les distributions d'énergie (15) qu'ils introduisent dans le substrat (9, 9', 9", 9‴, 11) sont contrôlées de manière correspondante, dans lequel de préférence (a) la distribution d'énergie (15) introduites par les différents foyers linéaires en particulier en ce qui concerne la position et/ou la forme, est différente, les maxima des différentes distributions d'énergie (15) se trouvant de préférence à des positions différentes à l'intérieur du substrat (9, 9', 9", 9‴, 11), et/ou (b) les trajectoires (17, 17', 17", 17‴) des deux ou plusieurs foyers linéaires sont identiques.

15. Procédé selon l'une quelconque des revendications précédentes, dans lequel l'orientation d'au moins une partie du foyer linéaire à l'intérieur du substrat (9, 9', 9", 9‴, 11) par rapport à la direction principale de propagation du faisceau laser (3, 3', 3", 3‴) dans le substrat est réglée en contrôlant la distribution d'énergie (15) à l'intérieur du substrat (9, 9', 9", 9‴, 11) et en ajustant en outre la position du foyer dans le matériau du substrat, l'ajustement de la position du foyer étant de préférence effectué en modifiant la distance (D, D', D", D‴) entre une optique de focalisation et le substrat (9, 9', 9", 9‴) 11) et/ou l'épaisseur du substrat (9, 9', 9", 9‴, 11) est inférieure à la moitié de la longueur du foyer linéaire potentiellement possible, pour une configuration optique donnée, le long de l'étendue de l'épaisseur du substrat (9, 9', 9", 9‴, 11), dans lequel l'énergie d'impulsion et/ou le diamètre du faisceau ($\omega_0$) sont de préférence choisis de telle sorte que le substrat (9, 9', 9", 9‴, 11) soit modifié dans toute son épaisseur ou ne soit pas modifié dans toute son épaisseur.

16. Procédé selon l'une quelconque des revendications précédentes,
dans lequel

(i) le foyer linéaire est un foyer d'un faisceau d'Airy,
(ii) le foyer linéaire présente une déviation maximale par rapport à une ligne droite qui est supérieure à 20 $\mu$m, supérieure à 40 $\mu$m, supérieure à 60 $\mu$m, supérieure à 80 $\mu$m ou supérieure à 100 $\mu$m,
(iii) le faisceau laser (3, 3', 3", 3‴) est émis par un laser pulsé,
(iv) la longueur d'onde du faisceau laser (3, 3', 3", 3‴) est choisie dans une plage de longueurs d'onde comprise entre 200 nm et 1500 nm, de préférence la longueur d'onde est 343 nm, 355 nm, 515 nm, 532 nm, entre 750 nm et 850 nm, 1030 nm et/ou 1064 nm, l'objectif du microscope ou la lentille de Fourier d'une optique de focalisation (7, 7', 7", 7‴), avec laquelle le faisceau laser (3, 3', 3", 3‴) est de préférence focalisé sur le substrat (9, 9', 9", 9‴, 11), présente une distance focale de 10 à 20 mm, le coefficient de la phase cubique (paramètre laser bêta) présente une valeur comprise entre 0,5 x $10^3$/m et 5 x $10^3$/m, le diamètre du faisceau brut (paramètre laser $\omega o$) présente une valeur comprise entre 1 mm et 10 mm, de préférence comprise entre 2,5 mm et 5 mm, la durée d'impulsion (paramètre laser $\tau$) a une valeur comprise entre 0,1 et 10 ps, l'énergie d'impulsion (paramètre laser $E_p$) a une valeur comprise entre 1 et 1 500 $\mu$J, de préférence comprise entre 30 et 500 $\mu$J, en particulier de 474 $\mu$J, et/ou le nombre d'impulsions dans le train d'impulsions (paramètre laser N) a une valeur comprise entre 1 et 200, de préférence entre 1 et 100, en particulier entre 1 et 8,
et/ou
(v) l'énergie d'impulsion du laser suffit uniquement à modifier au moins une propriété du matériau du substrat (9, 9', 9", 9‴, 11) le long d'une section déterminée du foyer linéaire ou à retirer ou déplacer du matériau du substrat (9, 9', 9", 9‴, 11), cette section étant plus courte que l'extension de la zone du substrat (13) dont la propriété matérielle doit être modifiée ou qui doit être retirée ou déplacée.

17. Procédé selon l'une quelconque des revendications précédentes, dans lequel les zones modifiées à l'intérieur du substrat (9, 9', 9", 9"', 11) sont ouvertes par la création d'une tension mécanique et/ou thermique et/ou par un procédé de gravure, en particulier afin de créer un trou traversant et/ou un trou borgne à l'intérieur du matériau du substrat, et/ou
dans lequel elles sont ouvertes le long d'un contourr fermé et/ou le long d'une modification s'étendant d'un côté à l'autre du substrat par des processus mécaniques, thermiques et/ou chimiques, en particulier afin de créer un contour intérieur ou extérieur avec une surface latérale formée.

Fig. 1

Fig. 2

Fig. 3

Fig. 4

Fig. 5

Fig. 6

Fig. 7

Fig. 8

Fig. 9a

Fig. 9b

Fig. 9c

Fig. 9d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10010971 B1
- US 10882143 B2
- US 10661384 B2
- US 2020254567 A1
- US 2020361037 A1


**In der Beschreibung aufgeführte Nicht-Patentliteratur**

- **FROEHLY, L.** ; **COURVOISIER, F.** ; **MATHIS, A.** ; **JACQUOT, M.** ; **FURFARO, L.** ; **GIUST, R.** ; **DUDLEY, J. M.** Arbitrary accelerating micron-scale caustic beams in two and three dimensions. *Optics express*, 2011, vol. 19 (17), 16455-16465